# EUROPÄISCHE PATENTANMELDUNG

(11) **EP 1 800 738 A1**
(43) Veröffentlichungstag der Anmeldung: **27.06.2007**
(21) Anmeldenummer: 05112954.2
(22) Anmeldetag: 23.12.2005
(51) Int. Cl.: B01F 15/02, B01F 5/04, B01F 3/08, B29C 65/48, B05C 9/00, B05D 5/10, B27G 11/00, C09J 5/00

(54) **Vorrichtung und Verfahren zur Bildung einer Klebstoff- und/oder Dichtstoffmasse, dergestalt hergestellte Kleb- und/oder Dichtstoffmasse sowie verklebte Substrate**

(71) Anmelder: Sika Technology AG, 6340 Baar (CH)
(72) Erfinder: Koch, Reto, 5433, Remetschwil (CH)
(74) Vertreter: Isler, Jörg

(57) **Zusammenfassung**

Die erfindungsgemässe Vorrichtung (1), die der Bildung eines Kleb- und/oder Dichtstoffstromes (AB) dient, der eine Hauptkomponente (A) und wenigstens eine Nebenkomponente (B) umfasst, weist einen der Führung des Kleb- und/oder Dichtstoffstromes (AB) dienenden Behälter (4) auf, in den die Haupt- und die Nebenkomponente (A; B) unter Druck einführbar und zum Kleb- und/oder Dichtstoffstrom (AB) zusammenführbar sind, der aus einer Austrittdüse (45) des Behälters (4) abgebbar ist. Erfindungsgemäss ist ein in den Behälter (4) hinein ragendes Transferelement (2) mit wenigstens einem darin eingebetteten Zufuhrkanal (21, 210, 71) und wenigstens einem Endstück (3) vorgesehen, durch das die wenigstens eine Nebenkomponente (B) derart in den Behälter (4) einführbar ist, dass sie von dem durch den Behälter (4) fliessenden Strom der Hauptkomponente (A) aufgenommen und vollständig umschlossen wird und dass Mittel (7, 9, 200) vorgesehen sind, mittels derer während der Bildung des Kleb- und/oder Dichtstoffstromes (AB) eine Drehung zwischen dem Endstück (3) und dem Strom der Hauptkomponente (A) realisierbar ist.

## Beschreibung

### Technisches Gebiet

Die Erfindung betrifft eine Vorrichtung zur Bildung eines Stromes eines feuchtigkeitshärtenden Kleb- und/oder Dichtstoffes, der eine Hauptkomponente und wenigstens eine Nebenkomponente umfasst, sowie einen Kleb- und/oder Dichtstoff, welcher mit der erfindungsgemässen Vorrichtung appliziert wurde sowie mittels des Kleb- und/oder Dichtstoffs verbundene Substrate.

Als Kleb- und/oder Dichtstoffe sind beispielsweise einkomponentige feuchtigkeitshärtende Silan- oder Isocyanatgruppen aufweisende Prepolymere verwendbar. Diese Kleb- und/oder Dichtstoffe haben den Nachteil, dass sie nur langsam aushärten und dass die Aushärtungsgeschwindigkeit von der Luftfeuchtigkeit der Umgebung abhängt, d.h. dass sie in Gegenden mit tiefer Luftfeuchtigkeit oder in geschlossenen Systemen fast nicht aushärten. Um die Aushärtung zu beschleunigen, kann zum Beispiel Wasser als eine Nebenkomponente über Mischsysteme in feuchtigkeitshärtende Prepolymere eingemischt werden. Als Mischsysteme werden zum Beispiel Statikmischer verwendet, welche unter anderem dem schichtweisen Einmischen einer Beschleunigerkomponente in Einkomponentenklebstoffe dienen. Solche Mischer haben den Nachteil, dass es beim Erzeugen und Applizieren von Klebstoffraupen häufig zu Fehlklebungen kommt, weil eine oder mehrere der eingemischten Schichten einer normalerweise nicht selbstaushärtenden Beschleunigerkomponente bzw. Nebenkomponente im Aussenbereich der Klebstoffraupe an die zu verklebende Oberfläche angrenzen, was zu Schwachstellen in der Haftung führt.

Ein schnelleres Aushärten des Kleb- und/oder Dichtstoffs kann anhand eines dynamischen Mischers erreicht werden, mittels dessen eine Hauptkomponente A und eine Nebenkomponente B homogen vermischt werden. Bei der Verwendung des dynamischen Mischers kann nun eine unerwünscht rasche Aushärtung des Komponentengemischs erfolgen. Ferner ist zur homogenen Mischung der Komponenten A, B oft eine relativ hohe Antriebsleistung erforderlich. Besonders wesentlich ist ferner, dass beim homogenen Mischen der beiden Komponenten A, B an den zu verbindenden Kontaktstellen von Substraten nun das Mischprodukt und nicht mehr die Hauptkomponente A auftritt. Der Kleb- und/oder Dichtstoffstrom besteht an den peripheren Zonen daher nicht mehr aus der Hauptkomponente A, die mittels der Nebenkomponente B beschleunigt ausgehärtet wird, sondern aus dem Mischprodukt, das oft weniger vorteilhafte Materialeigenschaften aufweist als die Hauptkomponente A selbst. Sofern die Durchmischung nicht homogen ist, besteht zudem die Gefahr, dass an den Kontaktstellen der zu verbindenden Substrate die unvermischte Nebenkomponente B auftritt. Die Durchmischung der Hauptkomponente A mit der Nebenkomponente B wird daher vermieden, wenn nur die Hauptkomponente A als Kleb- und/oder Dichtstoff und die Nebenkomponente B lediglich als Beschleuniger dienen soll.

### Darstellung der Erfindung

Der vorliegenden Erfindung liegt daher die Aufgabe zugrunde, eine weiter verbesserte Vorrichtung bereitzustellen, die zur Bildung eines aus einer Haupt- und wenigstens einer Nebenkomponente bestehenden Kleb- und/oder Dichtstoffstromes geeignet ist, der eine kürzere Reaktionszeit aufweist und bei dem eine Kontamination der Oberfläche des Kleb- und/oder Dichtstoffstromes durch die Nebenkomponente vermieden wird.

Insbesondere ist eine einfach aufgebaute und mit geringem Aufwand betreibbare und wartbare Vorrichtung zu schaffen, die eine einfache Applikation eines Kleb- oder Dichtstoffes auf eine Substratoberfläche ermöglicht, der auch in Gebieten mit tiefer Luftfeuchtigkeit oder in abgeschlossenen Systemen rasch aushärtet und somit weitgehend unabhängig von Luftfeuchtigkeitsunterschieden ist.

Erfindungsgemäss wird diese Aufgabe durch die Merkmale des ersten Anspruchs gelöst. Weitere vorteilhafte Ausgestaltungen der Erfindung sind in den Unteransprüchen angegeben.

Die erfindungsgemässe Vorrichtung, die der Bildung eines Kleb- und/oder Dichtstoffstromes dient, der eine Hauptkomponente und wenigstens eine Nebenkomponente umfasst, weist einen der Führung des Kleb- und/oder Dichtstoffstromes dienenden Behälter auf, in den die Haupt- und die Nebenkomponente unter Druck einführbar und zum Kleb- und/oder Dichtstoffstrom zusammenführbar sind, der aus einer Austrittsdüse des Behälters abgebbar ist.

Erfindungsgemäss ist ein in den Behälter hinein ragendes Transferelement mit wenigstens einem darin eingebetteten Zufuhrkanal und wenigstens einem Endstück vorgesehen, durch das die wenigstens eine Nebenkomponente B derart in den Behälter einführbar ist, dass sie von dem durch den Behälter fliessenden Strom der Hauptkomponente aufgenommen und vollständig umschlossen wird, wobei Mittel vorgesehen sind, mittels derer während der Bildung des Kleb- und/oder Dichtstoffstromes eine Drehung zwischen dem Endstück und dem Strom der Hauptkomponente realisierbar ist.

Anhand der erfindungsgemässen Vorrichtung kann daher wenigstens eine Nebenkomponente B derart in eine Hauptkomponente A eingelagert werden, dass die Nebenkomponente B vollständig von der Hauptkomponente A ummantelt ist, und die Nebenkomponente B im wesentlichen nicht mit der Hauptkomponente A vermischt ist. Dies führt zu einer guten Haftung des Kleb- oder Dichtstoffs auf mindestens einer Substratoberfläche und verhindert Fehlklebungen, die auftreten würden, wenn die Nebenkomponente B mit der Substratoberfläche partiell in Kontakt treten würde. Zudem wird die Nebenkomponente B in Form einer zylindrischen Spirale bzw. Helix in die Hauptkomponente A eingelagert. Die Abmessungen der Helix, wie der Helix-Durchmesser, der Schleifenabstand, der Windungsdurchmesser sind dabei durch Parameter bestimmbar, die fest oder wahlweise einstellbar sind. Die Nebenkomponente B kann daher dezentral in beliebiger Dichte in die Hauptkomponente A eingelagert werden. Möglich ist die Einlagerung mehrere Helicen der Nebenkomponente B oder weiterer Komponenten, die individuell verschiedene Abmessungen aufweisen können.

Durch die erfindungsgemässe Einlagerung der Nebenkomponente B oder weiterer Komponenten lassen sich die resultierenden Reaktionsprozesse zwischen den einzelnen Komponenten A, B, ... daher beliebig einstellen. Mittels eines vorzugsweise vorgesehenen Steuergeräts können die Komponentenströme wahlweise gesteuert, beispielsweise phasenweise zu- oder abgeschaltet, erhöht oder reduziert werden.

Die Aushärtungsgeschwindigkeit der mittels der erfindungsgemässen Vorrichtung applizierten Kleb- oder Dichtstoffe kann daher sehr hoch gewählt werden. Selbst in abgeschlossenen Systemen oder in Gebieten mit geringer Luftfeuchtigkeit und tiefen Temperaturen, ist die komplette Aushärtung von Klebstoffraupen oder Dichtstofffugen praktisch unabhängig von der Luftfeuchtigkeit der Umgebung innerhalb kurzer Zeit, beispielsweise innerhalb von wenigen Stunden, möglich.

Die erfindungsgemässe Vorrichtung erlaubt auch die rasche und sichere Verarbeitung hochmoduliger und ultrahochmoduliger Kleb- oder Dichtstoffe, d.h. von Kleb oder Dichtstoffen mit einem G-Modul von über 2.5 MPa bis 50 MPa, welche zur Durchhärtung eine grosse Feuchtigkeitsmenge benötigen.

Vorteilhaft ist der einfache Aufbau der erfindungsgemässen Vorrichtung, die keine aufwendige Dosier- und Anlagetechnik und keinen Mischer erfordert. Die Vorrichtung kann daher mit geringem Energieaufwand betrieben und mit minimalem Aufwand gewartet werden.

Im Gegensatz zu herkömmlichen Klebe- und Applikationsvorrichtungen ist eine genaue Dosierung und ein genaues Mischverhältnis nicht wesentlich und das System ist nicht von der Viskosität der verwendeten Komponenten abhängig. Des Weiteren hat der durch das erfindungsgemässe Verfahren applizierte Kleb- oder Dichtstoff trotz schneller Aushärtung eine lange Offenzeit. Ein weiterer Vorteil ist, dass beim durch die erfindungsgemässe Vorrichtung applizierte Kleb- oder Dichtstoff keine oder wenig Blasenbildung auftritt.

Die erfindungsgemässe Vorrichtung ist in verschiedenen vorteilhaften Ausgestaltungen realisierbar.

In einer ersten prinzipiellen Ausgestaltung der Vorrichtung ist das Transferelement drehbar gelagert und direkt oder über eine gegebenenfalls mit einem Zufuhrkanal versehene Antriebswelle mit einem Antriebsmotor verbunden. Das Transferelement kann dabei drehbar um eine Achse oder, beispielsweise mittels eines Kugelgelenks, drehbar um einen Punkt gelagert sein.

In dieser ersten prinzipiellen Ausgestaltung ist das Transferelement mit geringer Antriebsenergie derart innerhalb des Behälters drehbar, dass die Austrittsöffnung des Endstücks einer Kreisbahn folgt. Sofern die Austrittsöffnung des Endstücks stetig in derselben Richtung der Kreisbahn folgt und die Hauptkomponente A stetig durch den Behälter fliesst, was vorzugsweise realisiert wird, wird die Nebenkomponente B in Form einer Helix in die Hauptkomponente A eingelagert, wobei der Helix-Durchmesser durch den Abstand der Austrittsöffnung des Endstücks von der Drehachse und die Steigungshöhe bzw. der Windungsabstand der Helix durch die Drehgeschwindigkeit des Transferelements und die Flussgeschwindigkeit der Hauptkomponente A bestimmt wird. Die Windungsdicke der Helix wird durch den Durchmesser der Austrittsöffnung und die Flussgeschwindigkeiten der Komponenten A und B bestimmt.

Die Lagerung des Transferelements mittels eines Kugelgelenks erlaubt einen einfachen Aufbau der Vorrichtung und eine vorteilhafte Zufuhr der Komponenten A und B. Insbesondere ist auch die Zufuhr weiterer Komponenten problemlos realisierbar.

In einer zweiten prinzipiellen Ausgestaltung der Vorrichtung ist der Behälter drehbar gelagert und mit einem Antriebsmotor verbunden.

Durch Drehung des Behälters kann nun die Hauptkomponente A erfasst und gegenüber dem wenigstens einen nicht vom Behälter gehaltenen Endstück in Drehung versetzt werden, wodurch dieselbe Wirkung wie bei der ersten Ausgestaltung der Vorrichtung erzielt wird.

Alternativ dazu kann der drehbar gehaltene Behälter mit dem wenigstens einen Endstück des Transferelements verbunden sein, das beispielsweise senkrecht oder schräg zur Längsachse des Behälters durch die Behälterwand in den Innenraum des Behälters hinein ragt und mit diesem gegenüber dem Strom der Hauptkomponente A gedreht wird, wodurch wiederum dieselbe Wirkung wie bei der ersten Ausgestaltung der Vorrichtung erzielt wird. Um eine Drehung der Hauptkomponente A zu vermeiden, während der Behälter gedreht wird, kann innerhalb des Behälters ein stationär gehaltenes Führungselement vorgesehen sein, entlang dem die Hauptkomponente A praktisch linear durch den Behälter geführt wird.

In weiteren Ausgestaltungen ist es auch möglich, sowohl den Behälter, als auch das Endstück unabhängig voneinander drehbar zu lagern und gegeneinander oder mit unterschiedlichen Winkelgeschwindigkeiten miteinander zu drehen.

Die Wahl der ersten oder zweiten Ausgestaltung der Vorrichtung wird durch die vom Anwender bevorzugten Lagervorrichtungen, Antriebsvorrichtungen und Zufuhrvorrichtungen für die Komponenten A, B, ... bestimmt. Bei der ersten prinzipiellen Ausgestaltung resultieren eine einfache Lagerung und ein einfacher Antrieb des Transferelements. Sofern dieses mittels eines Kugelgelenks gelagert ist, sind auch die Komponenten A, B, ... vorteilhaft zuführbar. Bei der zweiten prinzipiellen Ausgestaltung resultieren ebenfalls vorteilhafte Möglichkeiten zur Zufuhr der Komponenten A, B, ....

Besonders vorteilhaft ist eine dritte prinzipiellen Ausgestaltung der Vorrichtung, bei der das Endstück und der Behälter stationär gehalten sind und im Innenraum des Behälters ein mit dem Behälter und/oder mit dem Transferelement verbundenes Innengewinde oder Aussengewinde vorgesehen ist, entlang dem die Hauptkomponente A bzw. der Kleb- und/oder Dichtstoffstrom AB durch den Behälter transferierbar ist. Die Hauptkomponente A wird daher in der Art einer Schraube vorwärts durch den Behälter gedreht, wobei ihr mittels einer oder mehrerer Nebenkomponenten B wenigstens eine Helix eingeprägt wird.

Antriebs- und Lagerelemente entfallen bei dieser dritten Ausgestaltung der Vorrichtung, weshalb auch die Zufuhr der Komponenten A, B, ... besonders einfach ist. Die Abmessungen der Helix werden bei dieser Ausgestaltung insbesondere durch die Geometrie des Innengewindes und/oder des Aussengewindes bestimmt.

Das Endstück, durch das die Nebenkomponente B in den Behälter eintritt, kann fest oder justierbar mit dem Transferelement verbunden sein, so dass dessen Austrittsöffnung an einem fest vorgesehenen oder wählbaren Ort, beabstandet einerseits von der Achse des Behälters und andererseits von der Innenwand des Behälters positioniert ist. Dabei kann das Endstück mit seiner Austrittsöffnung in Flussrichtung der Hauptkomponente A, senkrecht dazu oder in einem dazwischen liegenden Winkel ausgerichtet sein. Das Endstück kann beispielsweise mit dem Transferelement verschraubt und auf einer einjustierten Höhe mittels einer Schraubenmutter fixiert sein.

Durch die einfache Ausgestaltung der Vorrichtung kann diese problemlos gewartet werden. Die Vorrichtungsteile können rasch demontiert und gereinigt werden. Um die einwandfreie Funktion auch während des Betriebs der Vorrichtung zu gewährleisten, werden vorzugsweise Reinigungswerkzeuge, nachstehend Abstreifer genannt, in die Vorrichtung integriert. Vorzugsweise ist wenigstens ein mit dem Behälter verbundener Abstreifer vorgesehen, der bis zur Austrittsöffnung des Endstücks in den Innenraum des Behälters hineinragt und diese mit jeder gegenseitigen Umdrehung des Transferelements und des Behälters phasenweise abstreift und/oder verschliesst.

Sofern der Abstreifer und das Endstück stirnseitig aneinander liegen, kann das Endstück nicht in Richtung hin zum Abstreifer justiert werden, um eine bevorzugte Position der Austrittsöffnung einzustellen. Eingestellt werden kann nur eine Position in einem sehr kleinen Justierbereich. Vorzugsweise wird der Abstreifer daher in Flussrichtung der Hauptkomponente A gegenüber dem Endstück verschoben angeordnet, so dass das Endstück parallel zum Abstreifer verschoben bzw. wahlweise justiert werden kann. Sofern das mit der Austrittsöffnung versehene Endstück beispielsweise L-förmig gegen den Abstreifer abgewinkelt ist, kann die Austrittsöffnung nach jeder Drehung des Endstücks gegen den Abstreifer ausgerichtet werden. Indem die Austrittsöffnung nach dem Justieren des Endstücks gegen den Abstreifer ausgerichtet und fixiert wird, bleibt gewährleistet, dass diese während des Betriebs, unabhängig von der gewählten Position stets gereinigt wird.

Die Form und Beschaffenheit der gegebenenfalls flexiblen Abstreifer können verschiedenartig gewählt werden. Beispielsweise sind Abstreifer wählbar die die Austrittsöffnung des Endstücks durch Spitzen, Kanten, und oder Flächen kontaktieren. Beispielsweise streift ein keilförmiger Abstreifer mit seiner frontseitigen Kante mit jeder Umdrehung einmal über die Austrittsöffnung und befreit diese von Anlagerungen. Möglich ist die Wahl eines Abstreifers, bei dem an eine Kante eine Zylindersegmentfläche anschliesst, durch die die Austrittsöffnung phasenweise verschlossen wird. Bei der Verwendung eines solchen Abstreifers wird nicht nur das Endstück gereinigt, sondern es resultiert auch eine Helix mit fehlenden Windungselementen, was für verschiedene Applikationen vorteilhaft ist. Die Nebenkomponente B wird punktuell oder segmentweise in die Hauptkomponente A eingelagert, wodurch sich die Wirkung der Nebenkomponente B entsprechend ändert. Zudem erhöht sich die Festigkeit der abgegebenen Raupe die von der Helix nicht vollständig durchdrungen ist.

Der Abstreifer kann an der Innenwand des Behälters vorgesehen sein, wodurch dessen Einsetzbarkeit jedoch beschränkt wird. Vorzugsweise werden daher mit wenigstens einem Abstreifer versehene Behältersegmente verwendet, die mit weiteren Behältersegmenten zu einem Behälter zusammengesetzt, vorzugsweise verschraubt werden können.

In einer weiteren vorzugsweisen Ausgestaltung ist das Transferelement und/oder der Behälter mit wenigstens einem Führungselement versehen, entlang dem die Hauptkomponente A bzw. der Kleb- und/oder Dichtstoffstrom AB im Behälter geführt wird. In der ersten und zweiten prinzipiellen Ausgestaltung der Vorrichtung sind beispielsweise Rillen oder Nuten, an der Innenwand des Behälters vorgesehen, mittels derer die zähflüssige Hauptkomponente A gehalten wird. In der ersten Ausgestaltung der Vorrichtung wird dadurch verhindert, dass die Hauptkomponente A der Drehung des Transferelements folgt. In der zweiten Ausgestaltung der Vorrichtung wird hingegen bewirkt, dass die Hauptkomponente A erfasst und praktisch ohne Schlupf zusammen mit dem Behälter gedreht wird.

Ein zentrales Element der erfindungsgemässen Vorrichtung ist das Transferelement das ein oder mehrstückig ausgestaltet und mit einem oder mehreren Zufuhrkanälen und Endstücken versehen sein kann, durch die die Nebenkomponente B oder weitere Komponenten in den Behälter einführbar sind.

In einer weiteren vorzugsweisen Ausgestaltung der Vorrichtung ist eine Steuereinheit vorgesehen, mittels der der Fluss wenigstens einer der Komponenten A, B, ... und/oder die Drehung zwischen dem Endstück und dem Strom der Hauptkomponente A einstellbar ist.

Die Hauptkomponente A und die Nebenkomponente B können aus Vorratsbehältern vorzugsweise mit Hilfe einer Pumpe oder Handpresse in den Behälter beziehungsweise den Zufuhrkanal der Vorrichtung befördert werden. Als Vorratsbehälter können beispielsweise Kartuschen, Hobbocks oder Fässer verwendet werden. Eine erfindungsgemässe Vorrichtung kann beispielsweise auf einen Kartuschenausgang oder auf eine Auslassöffnung einer Klebstoffpumpe aufgebracht, vorzugsweise aufgeschraubt werden.

Die erfindungsgemässe Vorrichtung eignet sich hervorragend zur Herstellung eines Kleb- oder Dichtstoffs aus einer Hauptkomponente A und wenigstens einer Nebenkomponente B, bei dem die Nebenkomponente B vollständig von der Hauptkomponente A ummantelt ist.

In einem weiteren Aspekt betrifft die vorliegende Erfindung daher einen Kleb- oder Dichtstoff AB, bestehend aus einer Hauptkomponente A und wenigstens einer Nebenkomponente B, die mittels einer erfindungsgemässen Vorrichtung zusammengeführt wurden.

Die Hauptkomponente A des Kleb- und/oder Dichtstoffs umfasst vorzugsweise mindestens ein Prepolymer mit mindestens zwei feuchtigkeitsreaktiven Gruppen. Das Prepolymer kann kristallin oder amorph sein. Die mindestens zwei feuchtigkeitsreaktiven Gruppen reagieren mit Wasser unter Bildung einer Species die zur Vernetzung von zwei oder mehreren derartigen Gruppen führt. Bevorzugt sind als feuchtigkeitsreaktive Gruppen Alkoxysilan- und / oder Isocyanat-Gruppen.

In einer ersten Ausführungsform handelt es sich beim Prepolymer mit mindestens zwei feuchtigkeitsreaktiven Gruppen um ein Polyurethanprepolymer mit mindestens zwei Isocyanat-Gruppen. Es wird aus der Umsetzung eines Polyisocyanates mit einer Verbindung, welche zwei oder mehrere NCO-reaktive funktionelle Gruppen aufweist. Derartige NCO-reaktive Gruppen sind insbesondere Hydroxyl- und primäre oder sekundäre Amino-Gruppen.

Ein Polyisocyanat enthält zwei oder mehrere NCO-Gruppen und beschreibt hier ein niedermolekulare Verbindung mit einem Molekulargewicht von unter 1000 g/mol. Beispiele für derartige Polyisocyanate sind 2,4- und 2,6-Toluylendüsocyanat (TDI) und beliebige Gemische dieser Isomeren, 4,4'-Diphenylmethandüsocyanat (MDI), die stellungsisomeren Diphenylmethandiisocyanate, 1,3- und 1,4-Phenylendüsocyanat, Oligomere und Polymere der vorgenannten Isocyanate, sowie beliebige Mischungen der vorgenannten Isocyanate. Besonders bevorzugt als Polyisocyanate sind MDI und TDI.

Als Verbindung, welche zwei oder mehrere NCO-reaktive funktionelle Gruppen aufweist, gelten insbesondere polymere Verbindungen. Beispiele für derartige polymere Verbindungen sind insbesondere Polyole, vorzugsweise Polyesterpolyole oder Polyetherpolyole, Polyamine, oder Polyaminoalkohole.

Die Herstellung der Polyurethanprepolymere erfolgt in einer bekannten Art und Weise direkt aus den Polyisocyanaten und den NCO-reaktiven Verbindungen, beispielsweise den Polyolen, oder durch schrittweise Adduktionsverfahren, wie sie auch als Kettenverlängerungsreaktionen bekannt sind.

Besonders bevorzugt sind Polyurethanprepolymere aus Polyolen und Polyisocyanten, insbesondere aus Diolen, Triolen oder Diol/Triol-Mischungen sowie aus Diisocyanaten, Trisocyanaten oder Düsocyanat/Trisocyanat-Mischungen.

In einer zweiten Ausführungsform handelt es sich beim Prepolymer mit mindestens zwei feuchtigkeitsreaktiven Gruppen um ein Prepolymer mit mindestens zwei Alkoxysilangruppen. Die Herstellung der Prepolymere mit mindestens zwei Alkoxysilangruppen erfolgt in einer bekannten Art und Weise.

In einer dritten Ausführungsform handelt es sich beim Prepolymer mit mindestens zwei feuchtigkeitsreaktiven Gruppen um ein Prepolymer, welches sowohl Alkoxysilan- als auch Isocyanatgruppen aufweist. Derartige Prepolymere sind beispielsweise durch die Umsetzung eines isocyanatfunktionellen Polyurethanprepolymers mit einem Silan, welches eine NCO-reaktive Gruppe aufweist, wobei dieses Silan in Bezug auf die Isocyanatgruppen des Polyurethanprepolymers unterstöchiometrisch eingesetzt wird.

Besonders bevorzugt als Prepolymer mit mindestens zwei feuchtigkeitsreaktiven Gruppen sind Polyurethanprepolymere mit mindestens zwei Isocyanat-Gruppen.

Je nach Bedürfnissen kann die Hauptkomponente A weiterhin gegebenenfalls nicht reaktive thermoplastische Materialien enthalten, wie beispielsweise Homo- oder Copolymere von ungesättigten Monomeren, insbesondere ausgewählt aus der Gruppe umfassend Ethylen, Propylen, (Meth)acrylsäure und deren Ester, Vinylester und Vinylalkohol. Insbesondere eignen sich hierfür Copolymere Ethylenvinylacetat (EVA) sowie ataktische ataktische Poly-a-olefine(APAO), Polypropylen (PP) oder Polyethylen (PE). Die Hauptkomponente A kann weitere Füllstoffe umfassen. Als Füllstoffe sind Russ und Kreiden bevorzugt.

Die Nebenkomponente B des zu applizierenden Kleb- oder Dichtstoffs umfasst vorzugsweise mindestens Wasser. Um eine gute Einarbeitung des Wassers in die Hauptkomponente A zu erhalten, ist es vorteilhaft, wenn die Nebenkomponente B ein Trägermittel enthält, das die Viskosität der Nebenkomponente B erhöht. Das Trägermaterial ist vorteilhaft ein organisches Polymer mit ionischen Gruppen. Derartige ionische Gruppen sind insbesondere Carbonsäure-Gruppe und/oder Sulfonsäure-Gruppen. Einerseits vorteilhaft als derartige organische Polymere sind Poly(meth)acrylsäuren sowie Copolymeren von (Meth)acrylsäuren. Besonders vorteilhaft ist das Trägermaterial ein Polyurethan mit mindestens einer Carbonsäure-Gruppe und/oder SulfonsäureGruppe. Als besonders geeignet als Trägermaterialien haben sich Polyurethane, zu deren Synthese Carbonsäuregruppen enthaltende Diole, insbesondere Dimethylolpropancarbonsäure, sowie Polyisocyanate verwendet werden. Unter Verwendung derartiger Trägermaterialien wird das Wasser durch das Trägermaterial mit ionischen Gruppen reversibel gebunden und bildet eine gelartige Paste.

Die Menge von Wasser in Bezug auf die feuchtigkeitsreaktiven Gruppen kann von unterstöchiometrisch bis überstöchiometrisch sein, insbesondere geeignet ist ein Verhältnis der reaktiven Gruppen [H₂O]/[NCO] oder [H₂O]/[an Silizium gebundenes Alkoxy] von über 2 bis 5, insbesondere von 2 bis 4. Bevorzugt wird überstöchiometrisch, insbesondere mit einem Verhältnis von 2 bis 3.

Weiterhin kann die Nebenkomponente zusätzliche Verbindungen mit mindestens zwei NCO-reaktiven Gruppen umfassen. Insbesondere handelt es sich hierbei um Polyamine oder Polyole

Es bestehen weitere Möglichkeiten eine Wasserpaste zu formulieren. Hierbei wird Wasser mit feinen Füllstoffen wie pyrogener Kieselsäure, wie beispielsweise Aerosil®, erhältlich von Degussa, oder Kreide oder Molekularsiebe vermischt. Hierbei wird durch das Wasser an den Oberflächen oder in den Poren der Füllstoff reversibel gebunden.

Bevorzugt als Trägermittel sind jedoch Wasserpaste sind organische Polymere mit ionischen Gruppen.

Wasserpasten mit organischen Polymeren, welche ionische Gruppen enthalten und für den Einsatz gemäss vorliegender Erfindung als Nebenkomponente B eingesetzt werden können, sind grundsätzlich bereits bekannt und werden beispielsweise Sikaflex®-254 oder SikaTack®-Plus, welche einkomponentige Warmmelt-Polyurethanklebstoff sind, im Sikaflex®-254 Booster System oder SikaTack®-Plus Booster System beigemischt.

Als weitere Bestandteile der Hauptkomponente A und/oder der Nebenkomponente B sind die dem Fachmann hierfür bekannten Zusätze wie Weichmacher, Füllstoffe, Haftvermittler, UV-Absorptionsmittel, UV- oder und Wärmestabilisatoren, Antioxidantien, Flammschutzmittel, optische Aufheller, Katalysatoren, Farbpigmente oder Farbstoffe, möglich.

Als Katalysatoren sind für Isocyanat-Gruppen aufweisende Prepolymere insbesondere Amine oder organische Metallverbindungen der Metalle Zinn, Zink oder Bismut geeignet. Als organische Metallverbindungen sind insbesondere Dibutylzinndilaurat (DBTL) bevorzugt.

Falls der Kleb- oder Dichtstoff Alkoxysilan-Gruppen aufweisende Prepolymere aufweist, sind Katalysatoren, welche die Hydrolyse und/oder Vernetzung von Alkoxysilan-Gruppen katalysieren, geeignet. Solche Katalysatoren umfassen beispielsweise Titanate.

Die Komponenten A und B liegen im Kleb- oder Dichtstoff vorzugsweise in einem Volumenverhältnis A zu B von 200 bis 10, insbesondere von 150 bis 20, bevorzugt 100 bis 30 vor.

Der mittels einer erfindungsgemässen Vorrichtung hergestellte Kleb- oder Dichtstoff AB kann mit mindestens einer Oberfläche mindestens eines Substrats kontaktiert werden. Der erfindungsgemässe auf mindestens eine Substratoberfläche applizierte Kleb- oder Dichtstoff wird vorzugsweise zur Verklebung und/oder Abdichtung von mindestens zwei Substratoberflächen verwendet. Der Kleb- oder Dichtstoff liegt vorzugsweise als Klebstoffraupe oder Dichtstofffuge vor.

Des weiteren betrifft die Erfindung daher ein Verfahren zum Verkleben und/oder Abdichten von mindestens zwei Substratoberflächen umfassend die Schritte: (i) applizieren eines mittels einer erfindungsgemässen Vorrichtung hergestellten Kleb- oder Dichtstoffes auf mindestens eine Substratoberfläche und kontaktieren des applizierten Kleb- oder Dichtstoffs mit einer weiteren Substratoberfläche; oder Applizieren eines mittels einer erfindungsgemässen Vorrichtung hergestellten Kleb- oder Dichtstoffes zwischen mindestens zwei Substratoberflächen; und (ii) Aushärten des applizierten Kleb- oder Dichtstoffes.

Das mindestens eine Substrat kann eine Vielzahl von Materialien darstellen. Insbesondere eignen sich Kunststoffe, organische Materialien wie Leder, Stoffe, Papier, Holz, Harz gebundene Holzwerkstoffe, Harz-Texil-Compositewerkstoffe, Glas, Porzellan, Keramik sowie Metalle, insbesondere lackierte Metalle und/oder Gebäudeelemente.

Als Kunststoffe eignen sich insbesondere Polyvinylchlorid (PVC), Acrylonitril-Butadien-Styrol-Copolymere (ABS), SMC (Sheet Molding Composites), Polycarbonat (PC), Polyamid (PA), Polyester (PE), Polyoxymethylen (POM), Polyolefine, insbesondere Polyethylen (PE) oder Polypropylen (PP), bevorzugt mit Plasma, Corona oder Flammen oberflächenbehandeltes PP oder PE.

Vorzugsweise ist mindestens ein Substrat eine Scheibe, vorzugsweise aus Glas und mindestens ein weiteres Substrat aus Glas, Holz, Lack, oder Kunststoff, insbesondere Polyvinylchlorid (PVC). Somit kann das erfindungsgemässe Verfahren vorzugsweise im Tür- oder Fensterbau, wo Glas mit einem Rahmen aus Holz oder Kunststoff verklebt wird, oder im Fahrzeugbau, wo Glas mit einer mit Lack beschichteten Karosserie verklebt wird, eingesetzt werden.

Der von der erfindungsgemässen Vorrichtung abgegebene Kleb- oder Dichtstoff AB weist daher nebst der raschen Aushärtung weitere vorteilhafte Eigenschaften auf. Insbesondere treten beim Auftragen des Kleb- oder Dichtstoffs AB auf ein Substrat keine partiellen Fehlklebungen auf. Bei der Verbindung von zwei Substraten resultieren daher stets optimale Verbindungen.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen. Es sind nur die für das unmittelbare Verständnis der Erfindung wesentlichen Elemente gezeigt. Die Strömungsrichtung der Medien ist mit Pfeilen angegeben.

Es zeigen:
- Fig. 1: in Schnittdarstellung das Frontteil einer erfindungsgemässen Vorrichtung 1 in einer ersten prinzipiellen Ausgestaltung mit einem drehbar gelagerten und mit einer Antriebseinheit (nicht dargestellt) verbundenen Transferelement 2, das einen Zufuhrkanal 21 aufweist, durch den eine Nebenkomponente B über ein Endstück 3 in einen Behälter 4 einführbar ist, durch den eine Hauptkomponente A führbar ist;
- Fig. 1a: das Endstück 3 von Figur 1 mit einem Montagegewinde 32, einer Arretiermutter 33 und mit einer zentralen Bohrung 31, die zu einer Austrittsöffnung 30 führt;
- Fig. 2: die Vorrichtung von Figur 1 mit einem Transferelement 2, das zwei in entgegen gesetzten Richtungen ausgerichtete Endstücke 3', 3" aufweist, die mit dem Zufuhrkanal 21 verbunden sind;
- Fig. 3: die Vorrichtung von Figur 2 mit Endstücken 3', 3", die je mit einem separaten Zufuhrkanal 21' bzw. 21" verbunden sind;
- Fig. 4a: in Schnittdarstellung eine weitere erfindungsgemässe Vorrichtung 1 in der ersten prinzipiellen Ausgestaltung mit einem mittels einer Gelenkkugel 23 drehbar gelagerten und mit einer Antriebseinheit verbundenen Transferelement 2, das einen Zufuhrkanal 21 aufweist, durch den eine Nebenkomponente B über ein Endstück 3 in den frontseitigen Innenraum 441 eines Behälter 4 einführbar ist, durch den eine Hauptkomponente A führbar ist;
- Fig. 4b: die Vorrichtung 1 von Figur 4a mit weiter gedrehtem Transferelement 2;
- Fig. 5: in räumlicher Ansicht die Vorrichtung 1 von Figur 4b mit der dort gezeigten Stellung des Transferelements 2;
- Fig. 6: die Vorrichtung 1 von Figur 4a mit einer Gelenkkugel 23, aus der der Zufuhrkanal 21 in einen mittleren Teil 443 des Innenraums des Behälters 4 einmündet, der mit der Nebenkomponente B gefüllt wird;
- Fig. 7: die Vorrichtung 1 von Figur 4a mit einer Gelenkkugel 23, der die Nebenkomponente B direkt zugeführt wird;
- Fig. 8: in Schnittdarstellung das Frontteil einer erfindungsgemässen Vorrichtung 1 in einer zweiten prinzipiellen Ausgestaltung mit einem vorzugsweise stationär gehaltenen Transferelement 2 und einem drehbar gelagerten und mit einer Antriebseinheit (nicht dargestellt) verbundenen Behälter 4, durch den die Hauptkomponente A zyklisch um das Transferelement 2 bewegbar ist;
- Fig. 9: in Schnittdarstellung das Frontteil einer weiteren erfindungsgemässen Vorrichtung 1 in der zweiten prinzipiellen Ausgestaltung mit Transferelementen 2', 2", die mittels Montageelementen 26 mit dem drehbaren Behälter 4 verbunden sind, in dem ein Führungselement 22 vorgesehen ist, entlang dem die Hauptkomponente A, die zyklisch von den Endstücken 3 der Transferelementen 2', 2" durchlaufen wird, den Behälter 4 praktisch linear durchläuft;
- Fig. 9A: in räumlicher Darstellung das Führungselement 22 von Figur 9 eingeschlossen von der in Form einer Helix vorliegenden Nebenkomponente B, die in die Hauptkomponente A (mit Pfeil schematisch gezeigt) eingebettet ist;
- Fig. 10: in Schnittdarstellung das Frontteil einer erfindungsgemässen Vorrichtung 1 in einer dritten prinzipiellen Ausgestaltung mit stationär gehaltenem und mit einem Aussengewinde 29 versehenen Transferelement 2 und stationär gehaltenem und mit einem Innengewinde 49 versehenen Behälter 4, in dem die Hauptkomponente A durch das Innengewinde 49 und das Aussengewinde 29 um das Transferelement 2 bewegbar ist;
- Fig. 11: die Vorrichtung von Figur 1 mit einem mit der Innenwand 46 des Behälters 4 verbundenen Abstreifer 41, der frontseitig über eine Kante 411 die Austrittsöffnung 30 der Endstücke 3 kontaktieren und von Anlagerungen befreien kann;
- Fig. 12: einen Schnitt entlang der Linie A-A durch die mit einem keilförmigen Abstreifer 41 versehene Vorrichtung 1 von Figur 11;
- Fig. 13: einen Schnitt entlang der Linie A-A durch die Vorrichtung 1 von Figur 11, die mit zwei Abstreifern 41', 41" versehen ist, die die Form von Hohlzylindersegmenten aufweisen;
- Fig. 14: ein Behältersegment 40 mit einem keilförmigen Abstreifer 41;
- Fig. 15: ein Behältersegment 40' mit zwei Abstreifern 41', 41", die die Form von Hohlzylindersegmenten aufweisen;
- Fig. 16: die Vorrichtung 1 von Figur 1 mit einem Behälter 4, der ein Behältersegment 40' gemäss Figur 15 aufweist;
- Fig. 17: die Vorrichtung von Figur 1 mit einem Abstreifer 41, der parallel zur Verschiebungsachse eines justierbaren und fixierbaren Endstücks 3 angeordnet ist, dessen Austrittsöffnung 30 gegen den Abstreifer 41 ausgerichtet werden kann;
- Fig. 18: eine erfindungsgemässe Vorrichtung 1 in der ersten prinzipiellen Ausgestaltung mit einer Steuereinheit 5, einer Antriebsvorrichtung 9 und Zufuhrventilen 6A, 6B für die Hauptkomponente A und die Nebenkomponente B; und
- Fig. 19: zwei Substrate S1, S2, die mittels eines von einer erfindungsgemässen Vorrichtung 1 abgegebenen Kleb- und/oder Dichtstoffs AB mit einander verbunden sind.

### Wege zur Ausführung der Erfindung

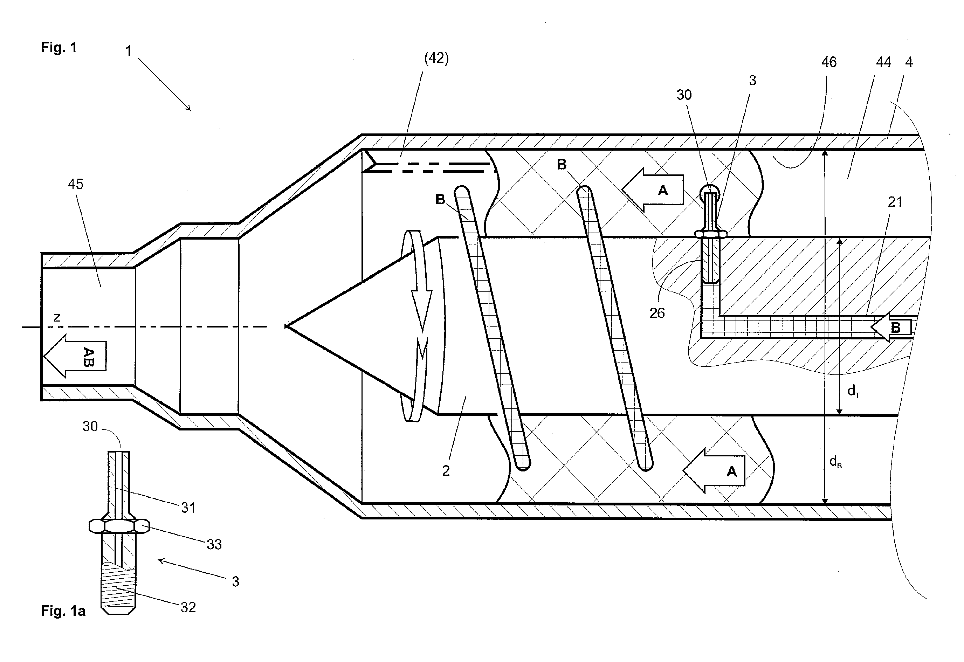

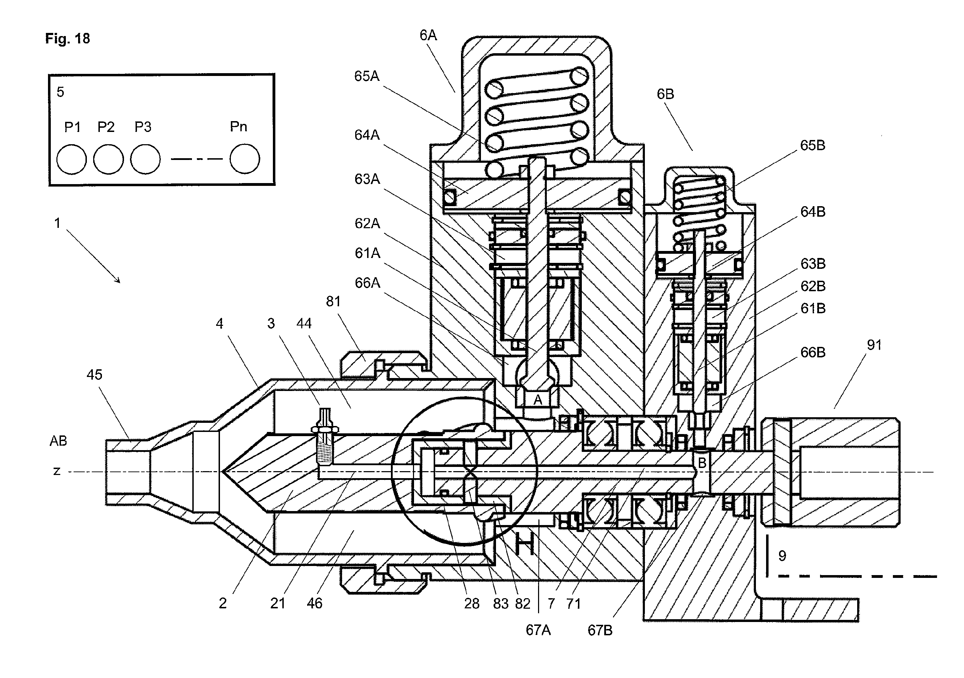

Figur 1 zeigt das Frontteil einer Vorrichtung 1 in einer ersten prinzipiellen Ausgestaltung. Die Vorrichtung 1 weist einen in einem Längsschnitt gezeigten Behälter 4 auf, durch den eine Hauptkomponente A geführt wird, in die mittels der Vorrichtung 1 eine Nebenkomponente B spiralförmig eingelagert werden kann, wodurch ein Kleb- und/oder Dichtstoffstrom AB gebildet wird. Dazu ist im Behälter 4, der hohlzylindrisch ausgestaltet und mit einer Austrittsdüse 45 versehen ist, ein drehbar gelagertes und mit einer Antriebseinheit (siehe z.B. Figur 18) verbundenes Transferelement 2 vorgesehen, das einen Zufuhrkanal 21 (in Schnittdarstellung gezeigte) aufweist, durch den die Nebenkomponente B über ein Endstück 3 in den Innenraum 44 des Behälters 4 einführbar ist. In der gezeigten Ausgestaltung wird die Hauptkomponente A unter Druck kontinuierlich durch den Behälter 4 gefördert, während das Transferelement 2 zyklisch um eine koaxial zur Achse des Behälters 4 verlaufende Achse z gedreht wird. Folglich wird die aus der Austrittsöffnung 30 des Endstücks 3 austretende Nebenkomponente B in Form einer Helix in die Hauptkomponente A eingelagert.

Die Austrittsöffnung 30 des Endstücks 3 ist einerseits vom Transferelement 2 und andererseits von der Innenwand 46 des Behälters 4 etwa ihn gleichem Abstand entfernt positioniert. Dadurch wird verhindert, dass die Nebenkomponente B zu nahe am äusseren Rand der Hauptkomponente A eingelagert wird und diesen nach aussen durchdringen und die Aussenfläche des Kleb- und/oder Dichtstoffstrom AB bzw. der abgegebenen Kleb- und/oder Dichtstoff-Raupe kontaminieren kann. Hingegen wird sichergestellt, dass die Nebenkomponente B nach der Applikation des Kleb- und/oder Dichtstoffstroms AB rasch in dessen periphere Zonen eindringen und eine rasche Aushärtung der Hauptkomponente A bewirken kann.

Zur individuellen Anpassung an die verwendeten Komponenten A, B, ... sowie die Eckwerte der geplanten Applikationen werden vorzugsweise Endstücke 3 verwendet, die es erlauben, die Position der Austrittsöffnung 30 wahlweise einzustellen. Selbstverständlich können auch Endstücke 3 mit angepasstem Durchmesser der Austrittsöffnung 30 eingesetzt werden. Zu berücksichtigen sind ferner der Aussendurchmesser d_{T} des Transferelements 2 und der Innendurchmesser d_{B} des Behälters 4. Sofern die Differenz der Durchmesser d_{T} und d_{B} klein ist, werden normalerweise nur geringe Mengen der Nebenkomponente B zugeführt.

Ein einfach ausgestaltetes Endstück 3, das mittels eines Gewindes 32 in eine im Transferelement 2 vorgesehene Gewindebohrung 26 eingedreht und mittels einer Schraubenmutter 33 auf einer bestimmten Höhe fixiert werden kann, ist in Figur 1a gezeigt. Durch das Endstück 3 ist eine Bohrung 31 hin zur Austrittsöffnung 30 geführt.

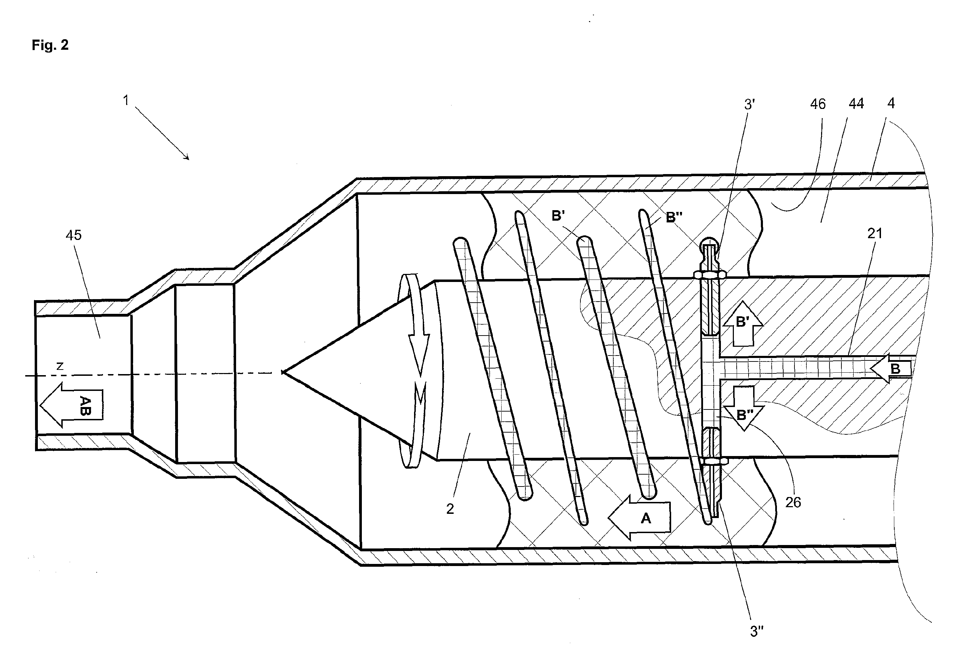

Figur 2 zeigt die Vorrichtung von Figur 1 mit einem Transferelement 2, das zwei mit dem Zufuhrkanal 21 verbunden und in entgegen gesetzten Richtungen ausgerichtete Endstücke 3', 3" aufweist, die unterschiedlich einjustiert sind. Beim Betrieb der Vorrichtung 1 werden mittels Teilströmen B' und B" der Nebenkomponente B daher zwei Helicen mit unterschiedlichen Durchmessern in den Strom der Hauptkomponente A eingelagert. Dadurch lassen sich die lokal verlaufenden Reaktionsprozesse präziser einstellen. Die Helix mit dem grösseren Durchmesser (durch den Komponentenstrom B" gebildet) weist einen geringeren Windungsdurchmesser (Dicke der Nebenkomponente B") auf, weshalb sie näher an den Rand des Kleb- und/oder Dichtstoffstroms AB heran geführt werden kann, ohne dass dieser von der Nebenkomponente B" durchdrungen wird.

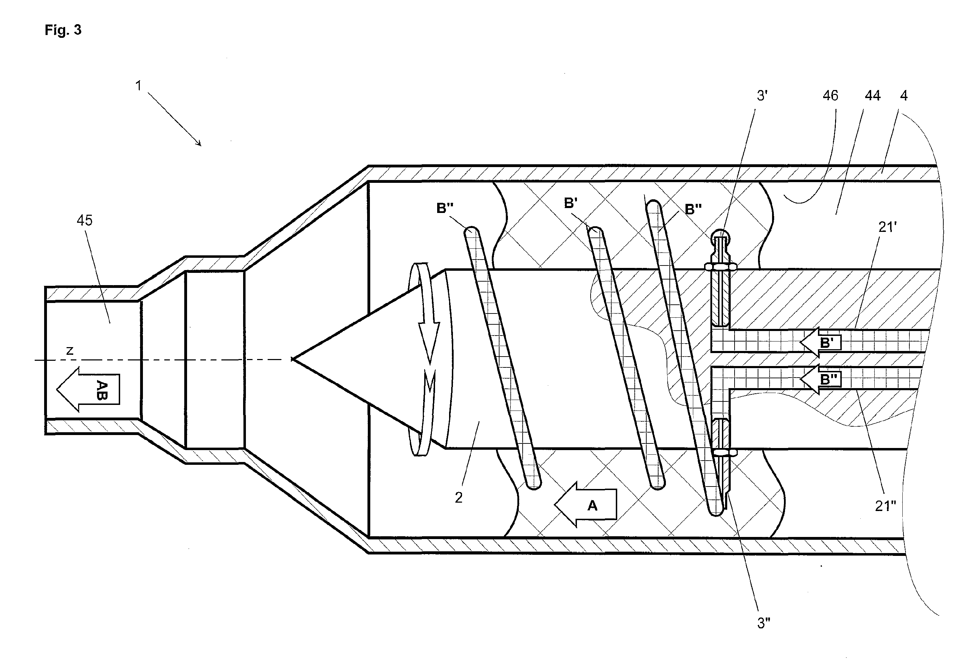

Figur 3 zeigt die Vorrichtung von Figur 2 mit Endstücken 3', 3", die je mit einem separaten Zufuhrkanal 21' bzw. 21" verbunden sind. Durch die beiden Zufuhrkanäle 21' bzw. 21" werden Teilströme B', B" der Nebenkomponente B zugeführt, die vorzugsweise individuell steuerbar sind. Beispielsweise kann die mittels des ersten Teilstroms B' erzeugte Helix durchgezogen werden, während die zweite Helix durch sequentielle Unterbrechung des zweiten Teilstroms B" nur segmentweise erzeugt wird. Durch eine Änderung der Flussgeschwindigkeiten der Komponentenströme B', B" sind ferner die Windungsdurchmesser der Helicen einstellbar. Die Durchmesser der Helicen selbst sind durch Justieren der Endstücke 3', 3" einstellbar. Die Steigungshöhen der Helicen sind durch entsprechende Wahl der Drehgeschwindigkeit des Transferelement 2 und der Flussgeschwindigkeit der Hauptkomponente A einstellbar. Selbstverständlich sind durch die Zufuhrkanäle 21' bzw. 21" auch unterschiedliche Nebenkomponenten in den Behälter 4 einführbar, so dass zahlreiche verschiedene Applikationen und Reaktionsprozesse realisierbar sind. Ferner können im Transferelement 2 weitere Zufuhrkanäle 21 mit je wenigstens einem angeschlossenen Endstück 3 vorgesehen werden. Anstelle von Bohrungen im Transferelement 2 können für die Zufuhr der Nebenkomponenten B, ... auch einzelne Rohrleitungen vorgesehen sein, die zusammengefasst als Bündel das Transferelement 2 bilden.

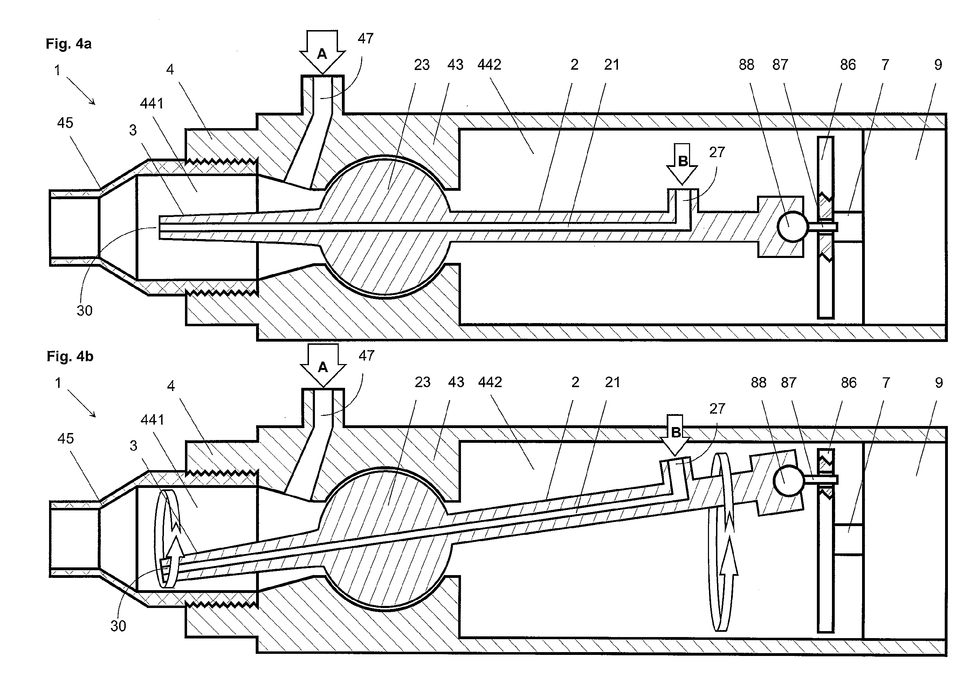

In den Figuren 1, 2 und 3 ist das Transferelement 2 um eine Achse z drehbar gelagert, die koaxial zur Achse des Behälters 4 ausgerichtet ist. Die Figuren 4 bis 7 zeigen erfindungsgemässe Vorrichtungen 1 bei denen das Transferelement 2 hingen mittels eines Kugelgelenks gelagert und somit um einen Punkt drehbar ist, der das Zentrum einer Gelenkkugel 23 bildet, die zusammen mit einem innerhalb des Behälters 4 vorgesehenen Lagerkörper 43 das Kugelgelenk bildet. Durch das Kugelgelenk wird der Innenraum des Behälters 4 in einen frontseitigen und einen antriebsseitigen Innenraum 441 bzw. 442 aufgeteilt. Im antriebsseitigen Innenraum 441 ist das rückseitige Ende des Transferelements 2 über ein Drehgelenk 87, 88 exzentrisch mit einer runden Antriebsplatte 86 verbunden, die von einem Motor 9 über eine Antriebswelle 7 angetrieben wird. Das Drehgelenk 87, 88 besteht aus einer von der Antriebsplatte 86 verschiebbar gehaltenen Zwischenwelle 87 die mit einer vom Endstück des Transferelements 2 gehaltenen Kopplungskugel 88 verbunden ist.

Mittels der Antriebsplatte 86 kann das rückseitige Ende des Transferelements 2 daher kreisförmig um eine Achse gedreht werden, die vorzugsweise koaxial zur Achse der Antriebswelle 7 durch den Mittelpunkt der Gelenkkugel 23 verläuft. Das frontseitige Ende des Transferelements 2, welches das der Abgabe der Nebenkomponente B dienende Endstück 3 bildet, ragt in den frontseitigen Innenraum 441 des Behälters 4 hinein und folgt mit der Austrittsöffnung 30 des Endstücks 3 ebenfalls einer Kreisbahn konzentrisch zu derselben Achse. In die durch eine Eintrittsöffnung 47 im Behälter 4 in den frontseitigen Innenraum 441 eindringende und diesen durchfliessende Hauptkomponente A kann daher auch bei dieser Ausgestaltung der Vorrichtung 1 eine aus der Nebenkomponente B bestehende Helix eingelagert werden.

Aus den Figuren 4 bis 7 ist ersichtlich, dass die Hauptkomponente A besonders einfach in den frontseitigen Innenraum 441 des Behälters 4 einführbar ist. Selbstverständlich kann die Hauptkomponente A auch über mehrere Kanäle in den Behälter 4 eingeführt werden, so dass ein gleichförmiger Fluss der Hauptkomponente A resultiert.

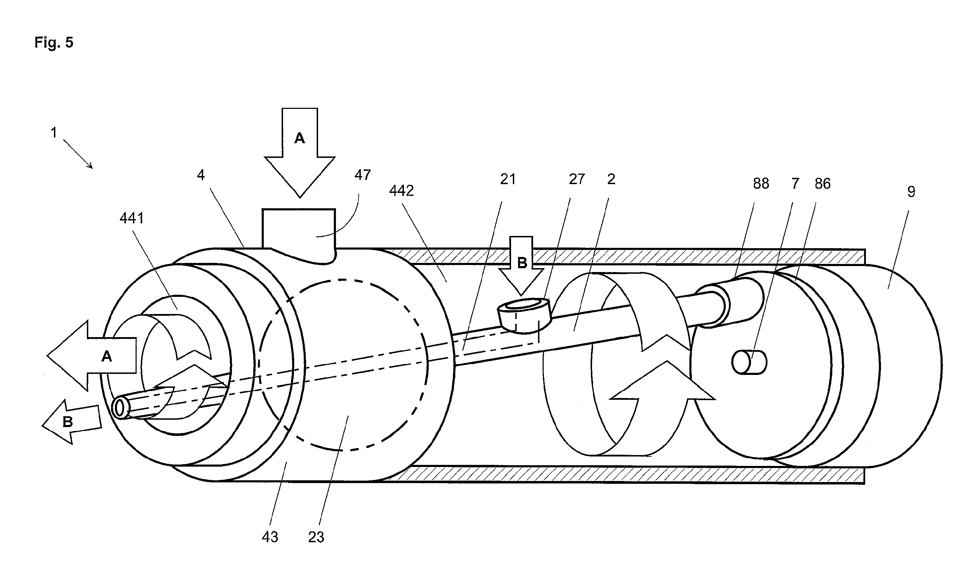

Die Ausgestaltungen der in den Figuren 4 bis 7 gezeigten Vorrichtungen unterscheiden sich nun praktisch nur durch die Zufuhr der wenigstens einen Nebenkomponente B. In den Figuren 4a, 4b und 5, die alle dieselbe Ausgestaltung der Vorrichtung 1 zeigen, verläuft der Zufuhrkanal 21 von der Austrittsöffnung 30 des Endstücks 3 durch die Gelenkkugel 23 hin zur Austrittsöffnung 27 am antriebsseitigen Ende des Transferelements 2. In Figur 4a ist das Transferelement 2 in einer horizontalen Ebene ausgerichtet und entsprechend gedreht; d.h. die Austrittsöffnung 30 liegt hinten. In Figur 4b ist das Transferelement 2 in einer vertikalen Ebene ausgerichtet und entsprechend gedreht; d.h. die Austrittsöffnung 30 liegt unten. Figur 5 zeigt die Vorrichtung 1 (ohne Austrittsdüse 45) in räumlicher Darstellung mit dem Transferelement 2 in der in Figur 4b gezeigten Lage.

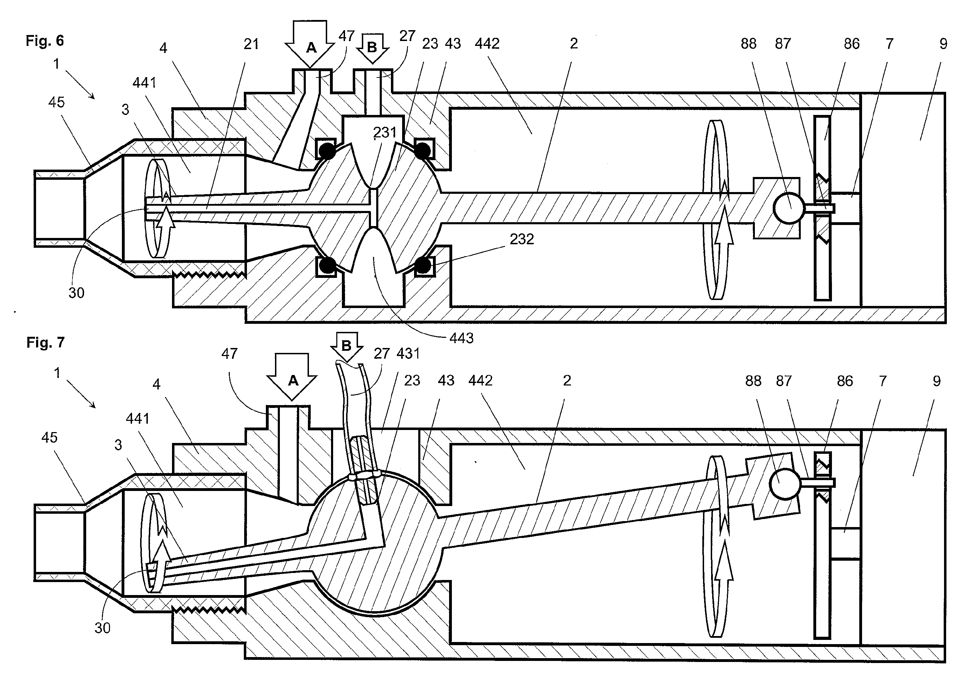

In den Vorrichtungen 1 von Figur 6 und 7 wird die Nebenkomponente B direkt in die Gelenkkugel 23 eingeführt.

Der Behälter 4 der in Figur 6 gezeigten Vorrichtung 1 weist im Bereich des Lagerkörpers 43 einen mittleren Teil 443 des Innenraums auf, der gegen die beiden anderen Teile 441, 442 des Innenraums mittels Dichtungen 232 abgedichtet ist und in dem die Gelenkkugel 23 gelagert ist. Die in den mittleren Teil 443 des Innenraums eingeführte Nebenkomponente B kann durch breite Ausnehmungen 231 in der Gelenkkugel 23 in den Zufuhrkanal 21 eindringen und wird weiter bis zur Austrittsöffnung des Endstücks 3 gefördert.

Bei der in Figur 7 gezeigten Ausgestaltung der Vorrichtung 1 wird die Anschlussleitung 27 für die Nebenkomponente B mittels eines Anschlusselements direkt mit der Gelenkkugel 23 verbunden. Um die Drehung der Gelenkkugel 23 nicht zu behindern ist im Lagerkörper 43 eine Ausnehmung 431 vorgesehen, innerhalb der die Anschlussleitung 27 frei bewegt werden kann.

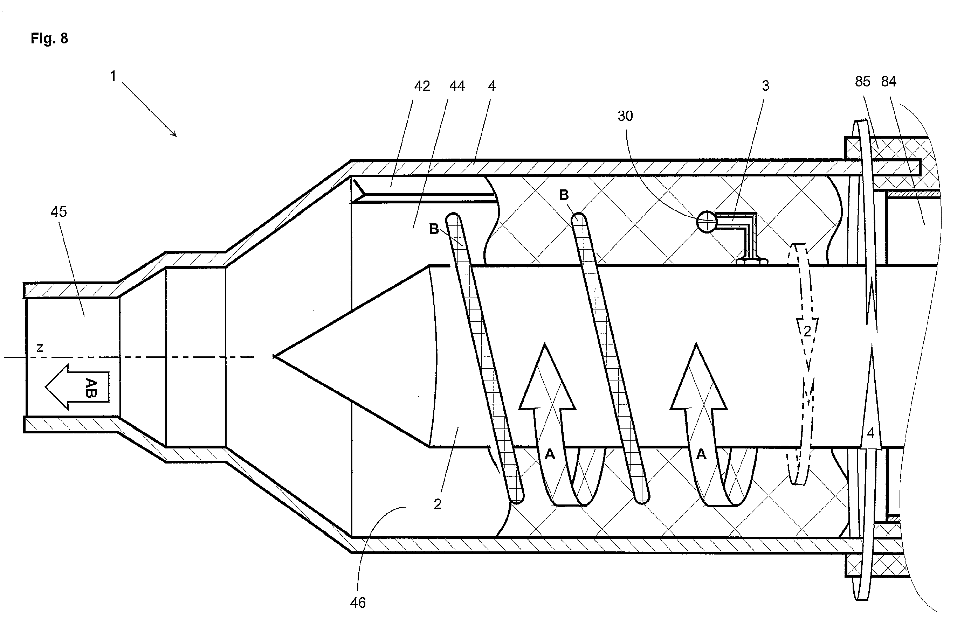

Figur 8 zeigt in Schnittdarstellung das Frontteil einer erfindungsgemässen Vorrichtung 1 in einer zweiten prinzipiellen Ausgestaltung mit einem vorzugsweise stationär gehaltenen Transferelement 2 und einem drehbar gelagerten und mit einer Antriebseinheit (nicht dargestellt) verbundenen Behälter 4, durch den die Hauptkomponente A, während deren Förderung durch den Behälter 4, zyklisch um das Transferelement 2 bewegt wird. Die Hauptkomponente A wird von der Innenwand 46 des Behälters 4, gegebenenfalls von wenigstens einem Führungselement 42 erfasst, welches die Hauptkomponente A drehfest mit dem Behälter 4 in axialer Richtung zur Austrittsdüse 45 hin führt. Aufgrund des stationären Haltens des Transferelements 2 können diesem die Nebenkomponenten B, ... besonders einfach zugeführt werden. Der hohlzylindrische Behälter 4 wird vorzugsweise in einen drehbar gelagerten Ringflansch 85 eingesetzt, der um ein Rohr 84 drehbar ist, durch das die Hauptkomponente A in den Behälter 4 einführbar ist. In Figur 8 ist zudem schematisch gezeigt, dass zusätzlich zum Behälter 4 auch das Transferelement 2 drehbar gelagert sein kann. Bei dieser Ausgestaltung werden der Behälter 4 und das Transferelement 2 vorzugsweise gegeneinander gedreht.

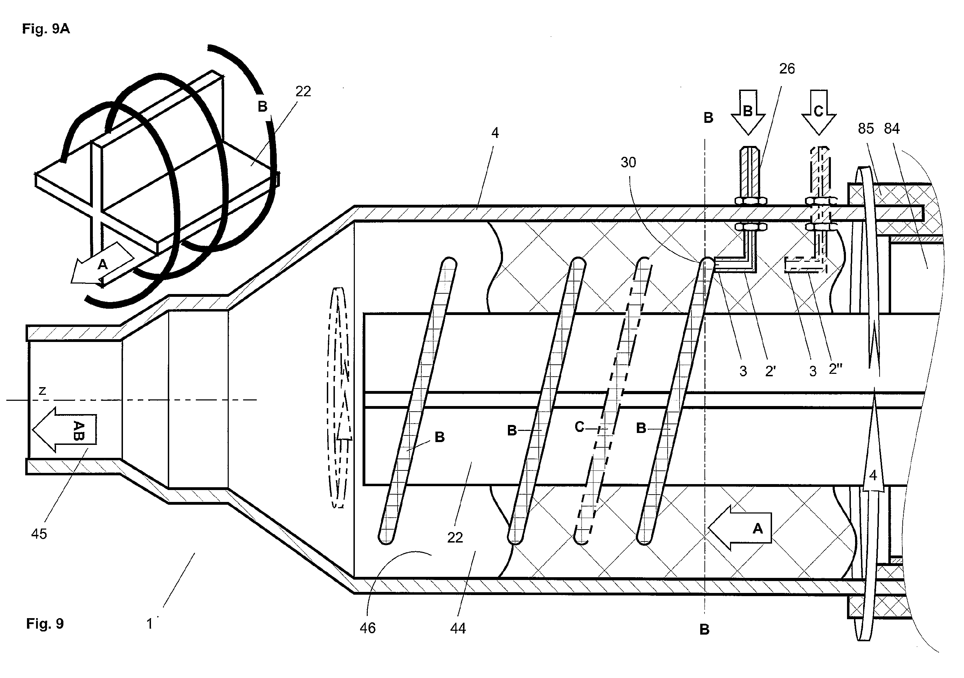

In Figur 9 sind zwei Transferelemente 2', 2" mit dem drehbar gelagerten Behälter 4 verbunden, so dass die Endstücke 3 der Transferelemente 2', 2" durch die Wand des Behälters 4 hindurch in dessen Innenraum 44 hinein ragen. Die durch die Endstücke 3 in den Behälter 4 eintretenden Nebenkomponenten B, (C, sofern vorhanden) werden daher in den Strom der Hauptkomponente A eingebettet, die den Behälter 4 durchläuft. Um zu verhindern, dass der Strom der Hauptkomponente A durch den Behälter 4 erfasst und gedreht wird, wird dieser entlang einem vorzugsweise vorgesehenen Führungselement 22 linear geführt. Um eine Drehung der Hauptkomponente A zu vermeiden kann der Behälter 4 auch vor und zurück gedreht werden.

Die wenigstens eine Nebenkomponente B muss daher nicht zwangsläufig in Form einer Helix in die Hauptkomponente A eingebettet werden, wie dies in Figur 9A gezeigt ist. Nebenkomponente B kann einer beliebigen Linie oder Kurve folgen, die einen vorzugsweise regelmässigen Verlauf aufweist. Durch das Vor- und Zurückdrehen des Behälters 4 ergibt sich ferner eine besonders einfach Zufuhr der wenigstens einen Nebenkomponente B, ... , die auch über mehrere Endstücke 3 in den Behälter 4 einführbar ist.

Durch kinematische Umkehr kann mittels der Vorrichtung 1 von Figur 9 eine weitere vorteilhafte Ausgestaltung der Vorrichtung 1 erzielt werden. Dabei wird die Hauptkomponente A beispielsweise mittels des Führungselements 22 gedreht, während der Behälter 4 mit den Endstücken 3 stationär gehalten wird. Das gezeigte Führungselements 22 kann zu diesem Zweck über die Antriebswelle 7 mit dem Motor 9 verbunden werden.

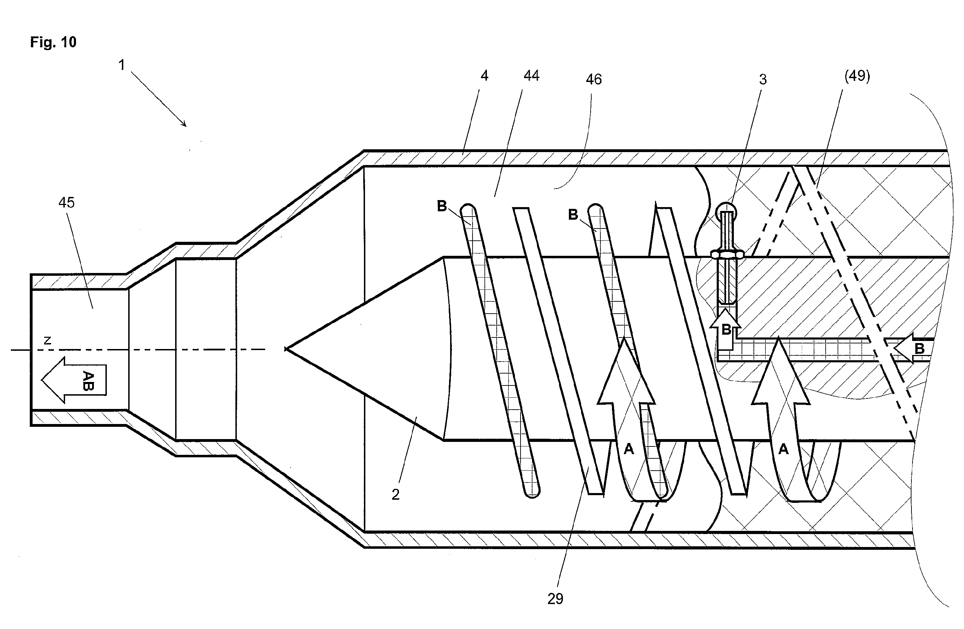

Figur 10 zeigt in Schnittdarstellung das Frontteil einer erfindungsgemässen Vorrichtung 1 in einer dritten prinzipiellen Ausgestaltung mit stationär gehaltenem und mit einem Aussengewinde 29 versehenen Transferelement 2 und stationär gehaltenem und mit einem Innengewinde 49 versehenen Behälter 4, in dem die Hauptkomponente A durch das Innengewinde 49 und das Aussengewinde 29 um das Transferelement 2 bewegt wird. Die Vorrichtung 1 in dieser Ausgestaltung erfordert daher keine Antriebsvorrichtung, um die gewünschte Drehung zwischen dem Transferelement 2 und der Hauptkomponente A zu erzielen. Möglich ist nur die Verwendung des Innengewindes 49 oder des Aussengewindes 29. Durch die Verwendung beider Gewinde 29, 49, wird die Bewegung der Hauptkomponente A hingegen optimal kontrolliert.

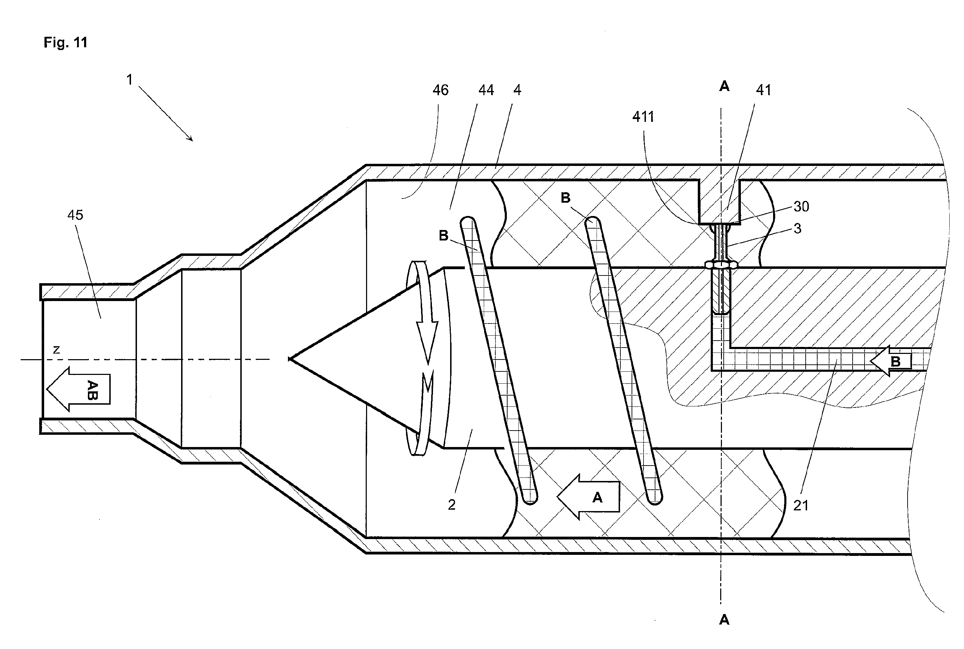

Aus den Figuren 1 bis 10 ist ersichtlich, dass die erfindungsgemässe Vorrichtung 1 in allen Ausgestaltungen einfach aufgebaut ist und daher mit geringem Aufwand hergestellt, betrieben und gewartet werden kann. Nach dem Entfernen des Behälters 4 ist ein direkter Zugriff auf das Transferelement 2 und die Endstücke 3, 3', 3", ... möglich, so dass diese problemlos justiert und gereinigt werden können. Um ein Verstopfen der Austrittsöffnungen 30 der Endstücke 3, 3', 3" während des Betriebs zu verhindern, ist die Vorrichtung 1 von Figur 11 an der Innenwand 46 des Behälters 4 mit einem Abstreifer 41 versehen, der frontseitig über eine Kante 411 die Austrittsöffnung 30 des Endstücks 3 kontaktieren und von Anlagerungen befreien kann. Mit jeder Umdrehung des Transferelements 2 oder des Behälters 4 wird die Austrittsöffnung 30 des Endstücks 3 daher jeweils abgestreift, so dass die einwandfreie Funktion der Vorrichtung 1 stets gewährleistet bleibt. Abstreifer dieser oder einer nachstehend beschriebenen Art können bei allen beschriebenen Ausgestaltungen der Vorrichtung 1 eingesetzt werden.

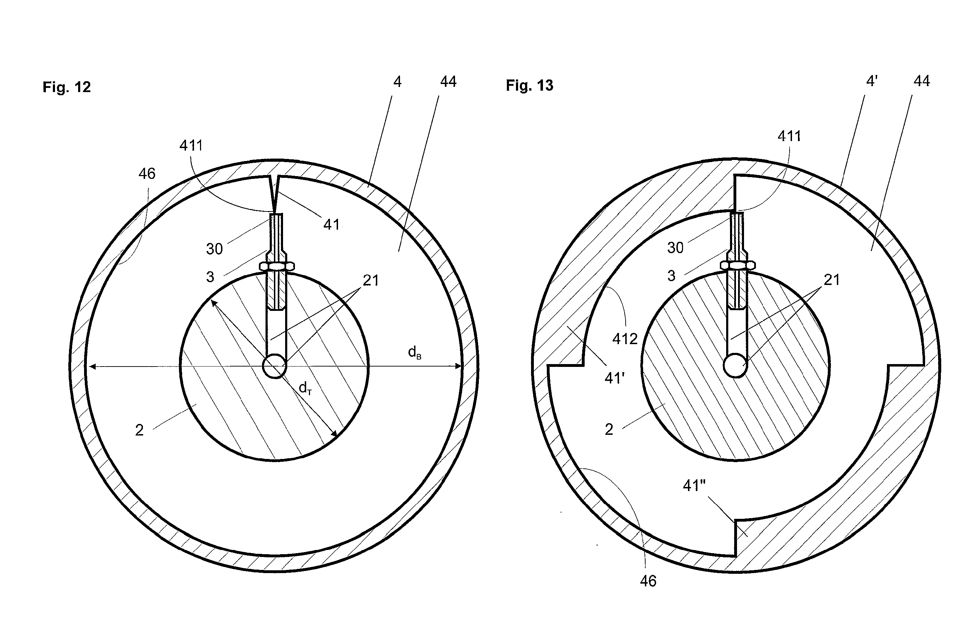

Figur 12 zeigt einen Schnitt entlang der Linie A-A durch die mit einem keilförmigen Abstreifer 41 versehene Vorrichtung 1 von Figur 11. Dabei ist ersichtlich, dass die Kante 411 des Abstreifers 41 die Austrittsöffnung 30 des Endstücks 3 kontaktiert.

Figur 13 zeigt einen Schnitt entlang der Linie A-A durch die Vorrichtung 1 von Figur 11, die mit zwei Abstreifern 41', 41" versehen ist, die die Form von Hohlzylindersegmenten aufweisen. Dabei wird die Austrittsöffnung 30 des Endstücks 3 mit einer vorlaufenden Kante 411 kontaktiert und anschliessend von einer Aussenfläche 412 des betreffenden Abstreifers 41' bzw. 41" verschlossen. Mit jeder Vierteldrehung des Transferelements 2 gegen den Behälter 4 wird die Austrittsöffnung 30 alternierend verschlossen und wieder geöffnet.

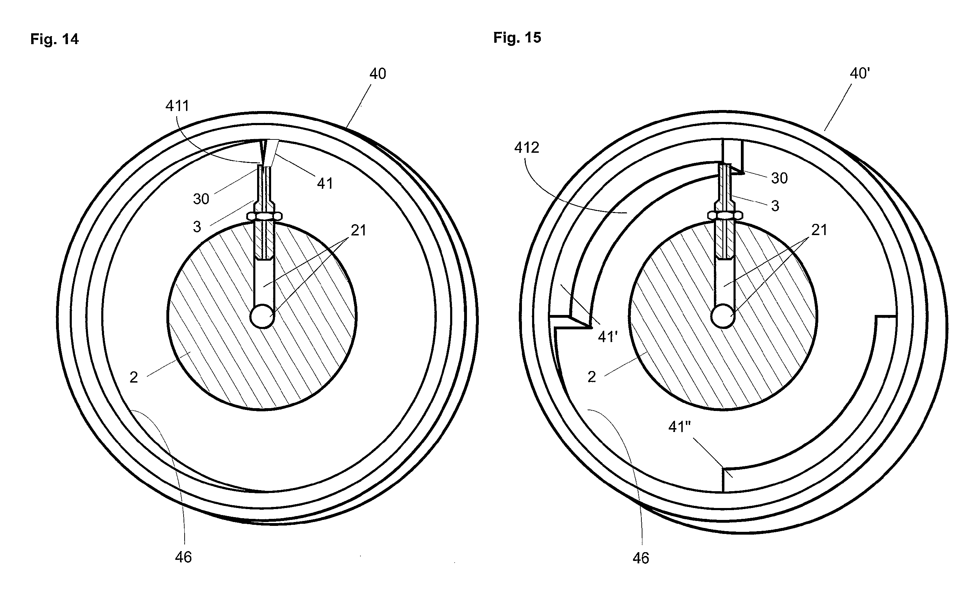

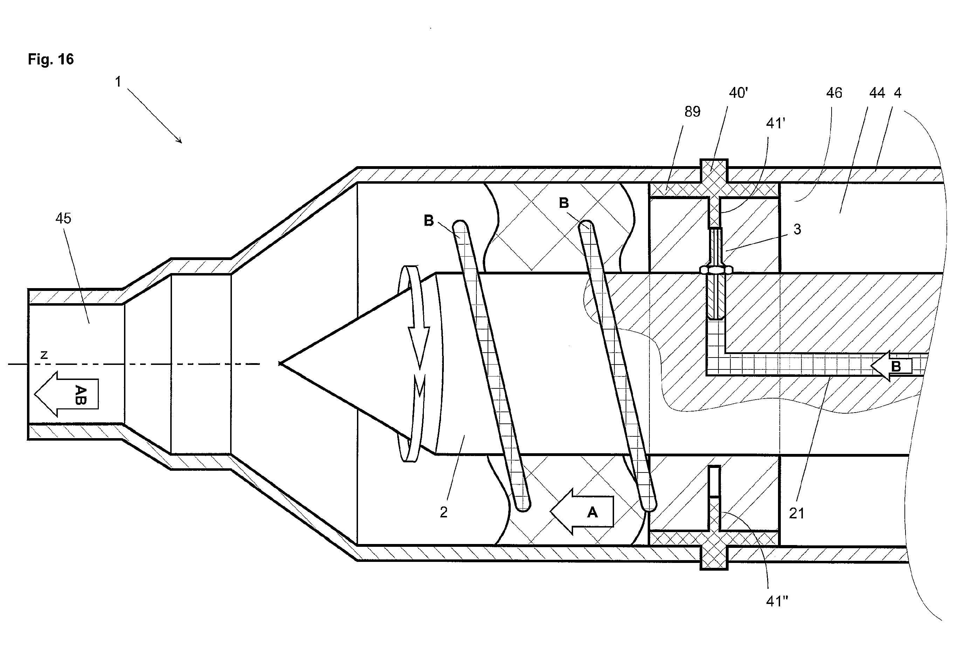

Sofern die Vorrichtung 1 mit wenigstens einem Abstreifer 41, 41', 41" versehen werden soll, kann dies besonders einfach mit den in Figur 14 und Figur 15 gezeigten Behältersegmenten 40, 40' erfolgen, die kostengünstig herstellbar und problemlos montierbar sind. Wie in Figur 16 gezeigt, werden die Behältersegmente 40, 40' vorzugsweise mit Flanschelementen 89 versehen, die mit weiteren Elementen des Behälters 4 verschraubbar sind. Die Verwendung von Behältersegmenten 40, 40' erlaubt ferner die Wahl eines Abstreifers 41, 41', 41", der an die jeweils einjustierte Position des Endstücks 3 optimal angepasst ist.

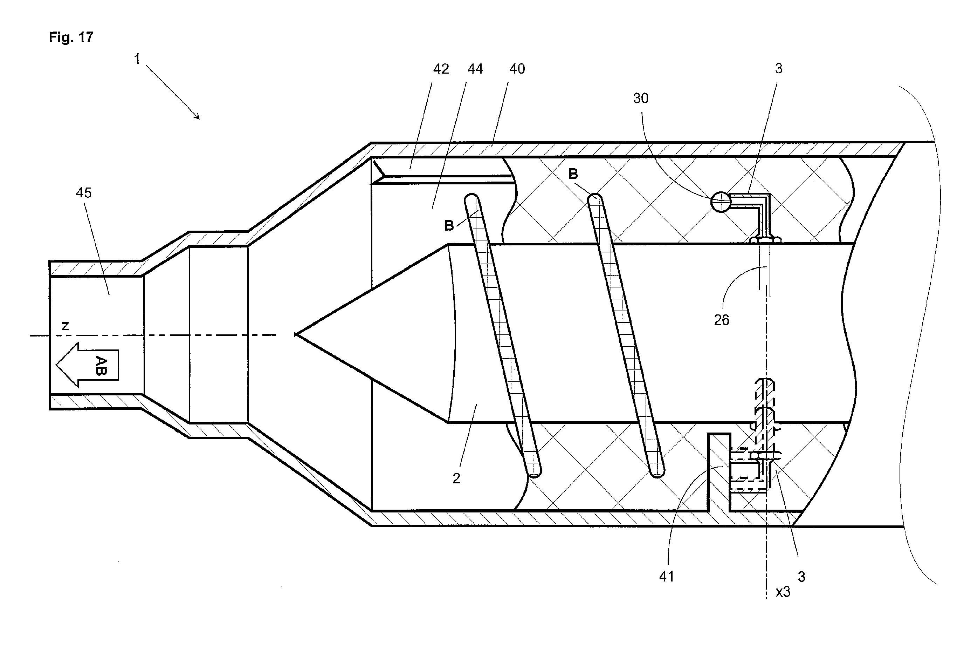

Die Wahl unterschiedlicher Abstreifer für entsprechende Einstellungen des Endstücks 3 wird bei der Vorrichtung von Figur 17 vermieden, bei der der Abstreifer 41 in Flussrichtung der Hauptkomponente A gegenüber dem Endstück 3 verschoben angeordnet ist, so dass dieses parallel zum Abstreifer 41 verschoben und wahlweise justiert werden kann. Das mit der Austrittsöffnung 30 versehene Endstück 3 ist L-förmig gegen den Abstreifer 41 abgewinkelt, so dass die Austrittsöffnung 30 mit jeder Drehung des Endstücks 3 einmal gegen den Abstreifer 41 ausgerichtet wird und von diesem erfasst und gereinigt werden kann. Das Endstück 3 kann daher durch Drehen beliebig justiert werden. Indem die Austrittsöffnung 30 nach dem Justieren gegen den Abstreifer 41 ausgerichtet und fixiert wird, bleibt gewährleistet, dass diese während des Betriebs, unabhängig von der gewählten Position stets gereinigt wird.

Figur 18 zeigt eine erfindungsgemässe Vorrichtung 1 in der ersten prinzipiellen Ausgestaltung mit einer Steuereinheit 5, einer Antriebsvorrichtung 9 und miteinander gekoppelten Zufuhrventilen 6A, 6B für die Hauptkomponente A und die Nebenkomponente B. Die Zufuhrventile 6A, 6B sind in bekannter Weise aufgebaut und weisen in einem Ventilkörper 62A, 62B eine elastisch gelagerte Nadel 61A, 61B auf, die den Ausgang einer Materialkammer 66A, 66B verschliesst, der zu einer Transferbohrung 67A, 67B führt, durch die die Haupt- und Nebenkomponente A, B voneinander getrennt in den Behälter 4 transferierbar sind. Die Nadel 61A, 61 B ist von einem an eine Druckkammer 63A, 63B anschliessenden Kolben 64A, 64B gehalten, der von einer Spiralfeder 65A, 65B niedergedrückt wird. Durch Erhöhung des Druckes in der Druckkammer 63A, 63B wird die Nadel 61A, 61 B angehoben und die Öffnung zur Transferbohrung 67A, 67B freigelegt, so dass die zu verarbeitende Komponente A, B von der Materialkammer 66A, 66B in die Transferbohrung 67A, 67B eintreten kann.

Das Frontteil der Vorrichtung 1 mit dem Behälter 4 und dem Transferelement 2 wurde oben beschrieben. Der Behälter 4 ist in die Transferbohrung 67A eingesetzt und mittels eines Kopplungsrings 81 gehalten. Durch die Transferbohrung 67A, 67B der Zufuhrventile 6A, 6B ist eine Antriebswelle 7 geführt, die einerseits über ein Kopplungselement 91 mit einem Antriebsmotor 9 und andererseits in einen Kopplungszylinder 28 des Transferelements 2 eingeführt und dort in einem metallenen Kopplungselement 82 mittels Kopplungsstiften 83 verankert ist.

Die Hauptkomponente A gelangt beim Betrieb der Vorrichtung 1 durch das erste Zufuhrventil 6A in dessen Transferbohrung 67A und weiter entlang der Antriebswelle 7 in den Behälter 4. Die in die Transferbohrung 67B gelangende Nebenkomponente B kann hingegen nur durch eine Bohrung in der Antriebswelle 7 in einen darin vorgesehenen Wellenkanal 71 eindringen, durch den die Nebenkomponente B zum Zufuhrkanal 21 des Transferelements 2 geführt wird.

Wesentliche Prozessparameter P1, P2, ... , insbesondere die Zufuhr der Komponente A und/oder B und der mit der Antriebswelle 7 gekoppelte Motor 9 sind vorzugsweise mittels einer Steuereinheit 5 steuerbar, die mit der erfindungsgemässen Vorrichtung 1 verbunden ist. Beispielsweise kann die Dichte der Einlagerung der Nebenkomponente B durch Steuerung der Zufuhr derselben und durch die Änderung der Drehgeschwindigkeit des Motors 9 eingestellt werden. Die Bildung des Kleb- und/oder Dichtstoffstromes kann daher in einfacher Weise den jeweiligen Bedürfnissen des Anwenders angepasst werden.

Die erfindungsgemässe Vorrichtung wurde in bevorzugten Ausgestaltungen beschrieben und dargestellt. Anhand der erfindungsgemässen Lehre sind jedoch vielfältige weitere fachmännische Ausgestaltungen der beschriebenen Vorrichtung 1 realisierbar. Insbesondere sind die Formen, Grössen und Materialbeschaffenheiten der Vorrichtungselemente in fachmännischer Weise wählbar. Verschiedenartige Ventile, sofern überhaupt vorhanden, und Antriebsvorrichtungen können in fachmännischer Weise eingesetzt werden. Die zu verarbeitenden Komponenten und deren Dosierung werden in Abhängigkeit der geplanten Anwendung gewählt und können in jeder Zusammensetzung mittels der erfindungsgemässen Vorrichtung 1 verarbeitet werden.

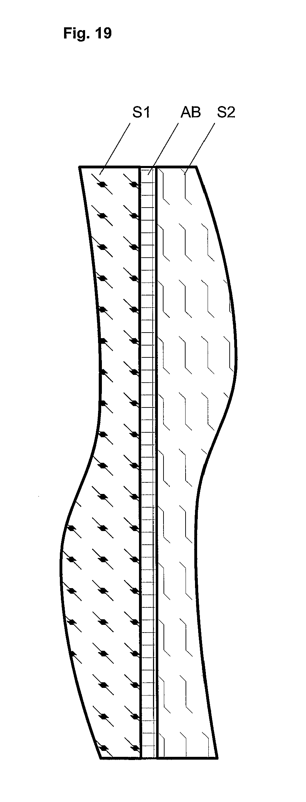

Die von der Vorrichtung 1 abgegebenen Kleb- und/oder Dichtstoffe können an ein einzelnes Substrat abgegeben werden oder, wie in Figur 19 gezeigt zur Verbindung von zwei oder mehreren Substraten S1, S2, ... verwendet werden.

### Bezugszeichenliste

- A: Hauptkomponente/Hauptkomponentenstrom
- B: Nebenkomponente/Nebenkomponentenstrom
- AB: Kleb- oder Dichtstoffstrom umfassend Hauptkomponente A und Nebenkomponente B, wobei die Hauptkomponente A die Nebenkomponente B vollständig ummantelt
- 1: Vorrichtung zur Bildung eines Kleb- und/oder Dichtstoffstromes
- 2, 2', 2": Transferelement
- 21: Zufuhrkanal
- 22: Führungselement
- 23: Lagerelement des Transferelements 2
- 231: Ausnehmung im Lagerelement 23
- 232: Dichtung für das Lagerelement 23
- 26: Montageelement
- 27: Eintrittsöffnung für die Nebenkomponente B
- 28: Kopplungszylinder
- 29: mit dem Transferelement 2 verbundenes Aussengewinde
- 3, 3', 3": Endstück
- 30: Austrittsöffnung des Endstücks 3
- 31: Bohrung durch das Endstück 3
- 32: Gewinde des Endstücks 3
- 33: Arretiermutter
- 4: Behälter
- 40, 40': Behältersegment
- 41, 41', 41": Abstreifer
- 411: Kante des Abstreifers
- 412: Zylindersegmentfläche
- 42: Führungselement
- 43: Lagerkörper im Behälter 4
- 431: Ausnehmung
- 44: Innenraum des Behälters 4
- 441: frontseitiger Teil des Innenraums 44
- 442: antriebsseitiger Teil des Innenraums 44
- 443: mittlerer Teil des Innenraums 44
- 45: Austrittsdüse des Behälters 4
- 46: Innenwand des Behälters 4
- 47: Eintrittsöffnung für die Hauptkomponente A
- 49: mit dem Behälter 4 verbundenes Innengewinde
- 5: Steuereinheit
- 6A, 6B: Zufuhrventil für die Komponente A bzw. B
- 61A; 61B: Verschlussnadel
- 62A; 62B: Ventilkörper
- 63A; 63B: Druckkammer
- 64A; 64B: Kolben
- 65A; 65B: Feder
- 66A; 66B: Materialkammer
- 67A; 67B: Transferbohrung
- 7: Antriebswelle
- 71: Wellenkanal
- 81: Kopplungsring
- 82: metallenes Kopplungselement
- 83: Kopplungsstift
- 84: Zufuhrrohr
- 85: Ringflansch
- 86: Antriebsplatte
- 87: Zwischenwelle
- 88: Kopplungskugel
- 89: Flanschelement
- 9: Antriebsmotor
- 91: Element zur Ankopplung des Antriebsmotors 9
- P1, P2, ...: Parameter
- S1, S2, ...: Substrate

## Patentansprüche

1. Vorrichtung (1) zur Bildung eines Kleb- und/oder Dichtstoffstromes (AB), der eine Hauptkomponente (A) und wenigstens eine Nebenkomponente (B) umfasst, mit einem der Führung des Kleb- und/oder Dichtstoffstromes (AB) dienenden Behälter (4), in den die Haupt- und die Nebenkomponente (A; B) unter Druck einführbar und zum Kleb- und/oder Dichtstoffstrom (AB) zusammenführbar sind, der aus einer Austrittdüse (45) des Behälters (4) abgebbar ist, **dadurch gekennzeichnet, dass** wenigstens ein in den Behälter (4) hinein ragendes Endstück (3) eines Transferelements (2) mit wenigstens einem darin eingebetteten Zufuhrkanal (21, 210, 71) vorgesehen ist, durch das die wenigstens eine Nebenkomponente (B) derart in den Behälter (4) einführbar ist, dass sie von dem durch den Behälter (4) fliessenden Strom der Hauptkomponente (A) aufgenommen und vollständig umschlossen werden kann und dass Mittel (7; 9; 22; 29; 49) vorgesehen sind, mittels derer während der Bildung des Kleb- und/oder Dichtstoffstromes (AB) eine Drehung zwischen dem Endstück (3) und dem Strom der Hauptkomponente (A) realisierbar ist.

2. Vorrichtung (1) nach Anspruch 1, **dadurch gekennzeichnet, dass**
a) das wenigstens eine Endstück (3) innerhalb des Behälters (4) drehbar gehalten ist; oder
b) der Behälter (4) um das vorzugsweise stationär gehaltene wenigstens eine Endstück (3) drehbar ist, wobei bei einer Drehung des Behälters (4) die Hauptkomponente (A) erfasst und gedreht wird; oder
c) der Behälter (4) mit dem wenigstens einen Endstück (3) drehbar ist, wobei bei einer Drehung des Behälters (4) die Hauptkomponente (A) im Wesentlichen nicht erfasst und nicht gedreht wird; oder
d) statische oder dynamische Mittel zur Drehung der Hauptkomponente (A) innerhalb des Behälters vorgesehen sind, wobei das wenigstens eine Endstück (3) vom Behälter (4) oder innerhalb des Behälters (4) stationär gehalten ist.

3. Vorrichtung (1) nach Anspruch 1 oder 2, **dadurch gekennzeichnet, dass** das wenigstens eine Endstück (3) mit dessen Austrittsöffnung (30) fest oder einstellbar, beabstandet von der Innenwand (46) des Behälters (4) positioniert ist, und/oder, dass das wenigstens eine Endstück (3) mit dessen Austrittsöffnung (30) vorzugsweise in Flussrichtung der Hauptkomponente (A) ausgerichtet ist.

4. Vorrichtung (1) nach Anspruch 1, 2 oder 3, **dadurch gekennzeichnet, dass** das Transferelement (2) mit dem wenigstens einen Endstück (3) drehbar gelagert und direkt oder über eine gegebenenfalls mit einem Zufuhrkanal (21, 210) versehene Antriebswelle (7) mit einem Antriebsmotor (9) verbunden ist.

5. Vorrichtung (1) nach Anspruch 1, 2 oder 3, **dadurch gekennzeichnet, dass** das wenigstens eine Endstück (3) innerhalb des drehbar gelagerten Behälters (4) stationär gehalten oder mit dem drehbar gelagerten Behälter (4) verbunden ist, und dass der Behälter (4) mit einem Antriebsmotor (9) verbunden ist.

6. Vorrichtung (1) nach Anspruch 1, 2 oder 3, **dadurch gekennzeichnet, dass** das innerhalb des Behälters (4) vorgesehene oder mit diesem verbundene wenigstens eine Endstück (3) und der Behälter (4) stationär gehalten sind und dass im Innenraum (44) des Behälters (4) ein mit dem Behälter (4) und/oder mit dem Transferelement (2) verbundenes Innengewinde (49) bzw. Aussengewinde (29) vorgesehen ist, entlang dem die Hauptkomponente (A) bzw. der Kleb- und/oder Dichtstoffstrom (AB) durch den Behälter (4) transferierbar ist oder dass innerhalb des Behälters (4) ein drehbar gelagertes Mittel (22) vorgesehen ist, mittels dessen die Hauptkomponente (A) relativ zum wenigstens einen Endstück (3) drehbar ist.

7. Vorrichtung (1) nach Anspruch 1, 2 oder 3, **dadurch gekennzeichnet, dass** das Transferelement (2) mittels eines Kugelgelenks (23, 43) drehbar gelagert und am antriebsseitigen Ende mit einer Antriebsvorrichtung (7, 86, 87, 88, 9) gekoppelt ist, so dass die Austrittsöffnung (30) des Endstücks (3) in einem Teil (441) des Innenraums des Behälters (4) zyklisch bewegbar ist, in den die Hauptkomponente (A) einführbar ist.

8. Vorrichtung (1) nach Anspruch 7, **dadurch gekennzeichnet, dass** das Transferelement (2) eine in einem Lagerelement (43) gehaltene Gelenkkugel (23) aufweist,
a) durch die hindurch der Zufuhrkanal (21) bis zu einem am antriebsseitigen Ende des Transferelement (2) vorgesehenen Anschlusselement (27) verläuft; oder
b) an die eine Zufuhrleitung für die wenigstens eine Nebenkomponente (B) direkt anschliessbar ist; oder
c) die wenigstens eine Ausnehmung (231) aufweist, durch die die wenigstens eine Nebenkomponente (B), die in einen gegen die Gelenkkugel (23) offenen Teil (443) des Behälters (4) einführbar ist, in den Zufuhrkanal (21) eintreten kann.

9. Vorrichtung (1) nach einem der Ansprüche 1-8, **dadurch gekennzeichnet, dass** wenigstens ein mit dem Behälter (4) verbundener Abstreifer (41; 41', 41") vorgesehen ist, der bis zur Austrittsöffnung (30) des Endstücks (3) in den Innenraum (44) des Behälters (4) hineinragt und diese mit jeder gegenseitigen Umdrehung des Transferelements (2) und des Behälters (4) phasenweise abstreift und/oder verschliesst, oder dass wenigstens ein mit dem Behälter (4) verbundener Abstreifer (41; 41', 41") vorgesehen ist, der in den Innenraum (44) des Behälters (4) hineinragt und gegen den die Austrittsöffnung (30) des parallel zum Abstreifer (41; 41', 41") verschiebbaren Endstücks (3) innerhalb eines Justierbereichs mit jeder Umdrehung einmal ausrichtbar ist.

10. Vorrichtung (1) nach Anspruch 9, **dadurch gekennzeichnet, dass** der Abstreifer (41; 41', 41") ein Körper mit wenigstens einer Kante (411) und/oder einer Zylindersegmentfläche (412) ist, entlang der die Austrittsöffnung (30) des Endstücks (3) mit jeder gegenseitigen Umdrehung des Transferelements (2) und des Behälters (4) führbar ist und/oder dass der Abstreifer (41; 41', 41") aus flexiblem oder festem Material besteht.

11. Vorrichtung (1) nach Anspruch 9 oder 10, **dadurch gekennzeichnet, dass** der Behälter (4) wenigstens ein lösbar montiertes Behältersegment (40, 40') aufweist, das mit wenigstens einem Abstreifer (41; 41', 41") versehenen ist.

12. Vorrichtung (1) nach einem der Ansprüche 1-11, **dadurch gekennzeichnet, dass** das Transferelement (2) oder der Behälter (4) mit wenigstens einem Führungselement (42) versehen ist, entlang dem die Hauptkomponente (A) bzw. der Kleb- und/oder Dichtstoffstrom (AB) im Behälter (4) geführt wird.

13. Vorrichtung (1) nach einem der Ansprüche 1-12, **dadurch gekennzeichnet, dass** das ein oder mehrstückige Transferelement (2) mehrere Zufuhrkanäle (21, 210, 71) mit Endstücken (3', 3") aufweist, durch die die Nebenkomponente (B) oder weitere Komponenten in den Behälter (4) einführbar sind.

14. Vorrichtung (1) nach einem der Ansprüche 1-13, **dadurch gekennzeichnet, dass** eine Steuereinheit (5) vorgesehen ist, mittels der der Fluss wenigstens einer der Komponenten (A, B, ...) und/oder die Drehung zwischen dem Endstück (3) und dem Strom der Hauptkomponente (A) einstellbar ist.

15. Kleb- oder Dichtstoff (AB), bestehend aus einer Hauptkomponente (A) und wenigstens einer Nebenkomponente (B), die mittels einer Vorrichtung (1) nach einem der Ansprüche 1-14 zu einem Kleb- und/oder Dichtstoffstrom (AB) zusammengeführt wurden.

16. Verfahren zum Verkleben und/oder Abdichten von mindestens zwei Substraten umfassend die Schritte:
i) Applizieren eines Kleb- oder Dichtstoffes nach Anspruch 15 auf mindestens eine Oberfläche mindestens eines Substrats (S1) und Kontaktieren des applizierten Kleb- oder Dichtstoff mit einer Oberfläche eines weiteren Substrats (S2); oder
Applizieren eines Kleb- oder Dichtstoffes nach Anspruch 15 zwischen mindestens zwei Substrate (S1, S2); und
ii) Aushärten des applizierten Kleb- oder Dichtstoffes.

17. Substrate (S1, S2), insbesondere Metall-, Glas-, Holz- und/oder Gebäudeelemente, verbunden mit einem Kleb- oder Dichtstoff (AB) nach Anspruch 15.
